(19) Europäisches Patentamt
European Patent Office
Office européen des brevets

(11) EP 4 470 375 A1

(12) **EUROPEAN PATENT APPLICATION**
published in accordance with Art. 153(4) EPC

(43) Date of publication:
**04.12.2024 Bulletin 2024/49**

(21) Application number: **23746722.0**

(22) Date of filing: **16.01.2023**

(51) International Patent Classification (IPC):
***A01N 41/04*** (2006.01) ***A01N 25/04*** (2006.01)
***A01N 25/30*** (2006.01) ***A01P 1/00*** (2006.01)
***C11D 1/14*** (2006.01) ***C11D 1/28*** (2006.01)
***C11D 3/48*** (2006.01)

(52) Cooperative Patent Classification (CPC):
**A01N 25/00; A01N 25/02; A01N 25/04; A01N 25/30; A01N 41/04; A01P 1/00; C11D 1/14; C11D 1/28; C11D 3/48;** Y02A 50/30

(86) International application number:
**PCT/JP2023/000966**

(87) International publication number:
**WO 2023/145508 (03.08.2023 Gazette 2023/31)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.01.2022 JP 2022011422**

(71) Applicant: **Kao Corporation**
**Tokyo 103-8210 (JP)**

(72) Inventors:
- **OHASHI Tatsuki**
**Tokyo 103-8210 (JP)**
- **YAMADA Kozo**
**Wakayama-shi, Wakayama 640-8580 (JP)**
- **SUGITANI Kei**
**Tokyo 131-8501 (JP)**

(74) Representative: **Hoffmann Eitle**
**Patent- und Rechtsanwälte PartmbB**
**Arabellastraße 30**
**81925 München (DE)**

(54) **ENVELOPE VIRUS INACTIVATOR**

(57) Provided are an inactivating agent for enveloped viruses, an inactivating composition for enveloped viruses and a method for inactivating enveloped viruses having high inactivation effects on enveloped viruses even under mild use conditions such as low concentrations or short-time contact.

An inactivating agent for enveloped viruses including, as an effective component, (a) an anionic surfactant having a critical micelle concentration of $0.2 \times 10^{-3}$ mol/L or more and $2.0 \times 10^{-3}$ mol/L or less at 25°C and a krafft point of 5°C or less and having a sulfonic acid group, a sulfate group or a salt of these substituents.

EP 4 470 375 A1

## Description

### Field of the Invention

The present invention relates to an inactivating agent for enveloped viruses, an inactivating composition for enveloped viruses and a method for inactivating enveloped viruses.

### Background of the Invention

In recent years, the risk of viral infections, typically, influenza, colds or the like has been increasing. Such pathogenic viruses are released with droplets of coughs, sneezes or the like of infected persons and enter through the respiratory mucosa, ocular mucosa or the like of susceptible persons to cause infection. The released viruses adhere to hands, faces, clothing or the like or are transmitted also to doorknobs, suspension straps or the like via human hands, and rubbing mouths, noses or eyes with hands that have touched them can also be an infection route. Therefore, performing handwashing, gargling, washing or the like after returning home to physically wash away viruses adhering to hands, faces or clothing has been recommended as an infection precaution.

Unlike bacteria, viruses have no self-propagating ability and propagate by living on cells of animals such as humans or the like or bacteria to utilize functions of those cells. Accordingly, effective antiviral agents after infection like antibiotics against bacteria are few, and infection prevention by disinfectants or the like is effective.

As an approach from this viewpoint, inactivation of viruses is considered to be useful for preventing infection with viruses. Conventionally, it has been known that anionic surfactants such as sodium dodecyl sulfate or the like have viral inactivation ability. However, the effect is obtained under such a condition as to bring a high-concentration solution into contact for 30 minutes or more, and a technique for achieving high viral inactivation ability, for example, under low-concentration conditions (hundreds of ppm) such as washing or the like or short-time conditions (30 seconds) such as handwashing or the like is strongly needed.

JP-B 5593572 discloses a technique relating to an antiviral agent in which saturated fatty acid soaps and an oleate soap are combined as effective components at a specific ratio, and describes in the Examples that an excellent effect is exhibited at a concentration of 0.0035 mol/L (approximately 1000 mass ppm).

JP-B 6860734 discloses a liquid cleaning agent composition for skin attaining excellent viral inactivation effects by using a weak alkaline composition in which a surfactant containing a quaternary ammonium salt is used in combination with a polyhydric alcohol.

JP-A 2021-66697 discloses a viral inactivation agent composition containing an anionic surfactant having a specific structure as an effective component and having a pH limited to acidity.

### Summary of the Invention

However, the above literatures do not suggest that viruses can be inactivated at lower concentrations and in shorter time, and there is room for improvement in the sense of mild use conditions aimed at reducing burdens on the body or the natural environment.

The present invention provides an inactivating agent for enveloped viruses, an inactivating composition for enveloped viruses and a method for inactivating enveloped viruses having high inactivation effects on enveloped viruses even under mild use conditions such as low concentrations or short-time contact.

The present invention relates to an inactivating agent for enveloped viruses including, as an effective component, (a) an anionic surfactant (hereinafter referred to as component (a)) having a critical micelle concentration of $0.2 \times 10^{-3}$ mol/L or more and $2.0 \times 10^{-3}$ mol/L or less at 25°C and a krafft point of 5°C or less and having a sulfonic acid group, a sulfate group or a salt of these substituents.

Further, the present invention relates to an inactivating composition for enveloped viruses including, component (a) as an effective component, and including water.

Further, the present invention relates to a method for inactivating enveloped viruses including, bringing the inactivating composition for enveloped viruses of the present invention into contact with a surface of interest on which enveloped viruses are present.

Further, the present invention relates to a method for inactivating enveloped viruses including, diluting the inactivating composition for enveloped viruses of the present invention with water containing Ca and/or Mg to obtain a mixed liquid, and bringing the mixed liquid into contact with a surface of interest on which enveloped viruses are present.

According to the present invention, provided are an inactivating agent for enveloped viruses, an inactivating composition for enveloped viruses and a method for inactivating enveloped viruses having high inactivation effects on enveloped viruses even under mild use conditions such as low concentrations or short-time contact.

## Brief Description of the Drawings

[FIG. 1] A graph on which the vertical axis plots a critical micelle concentration (25°C) of each component (a) or (a') used in the Examples and the horizontal axis plots a krafft point thereof.

## Embodiments of the Invention

The reason why the inactivating agent for enveloped viruses, the inactivating composition for enveloped viruses and the method for inactivating enveloped viruses of the present invention have high inactivation effects on enveloped viruses even under mild use conditions such as low concentrations or short-time contact is not wholly certain, but it is inferred to be as follows. However, it is not limited to the reason below.

While Yokohata et al. (Scientific Basis for Novel Viral Disinfection Mechanism Directed to Risk Control of Contact Infection Route ~ Systematic Review of Chemical Substance Group for Inactivating Coronaviruses and Influenza viruses~, Japanese Journal of Risk Analysis 30 (1): 1-24) have reported the three inactivation mechanisms of surfactants against enveloped viruses, 1) viral particle membrane disruption, 2) solubilization of membrane lipids and 3) protein denaturation, the present invention focuses attention on both the viewpoints of viral particle membrane disruption and protein denaturation, and it is inferred that the effect of the present invention is exhibited as an extremely highly lipophilic anionic surfactant of component (a) of the present invention works specifically and efficiently in terms of action force on viruses and viral particle adsorptivity.

The present inventors believe that, if measures to prevent infections can be taken with a minimum of functionalization agents and effort by deepening a sanitization technology based on the present invention, contribution to a sustainable society can be achieved from the viewpoint of sanitation or health.

### [Inactivating agent for enveloped viruses]

#### <Component (a)>

Component (a) of the present invention is an anionic surfactant having a critical micelle concentration of $0.2 \times 10^{-3}$ mol/L or more and $2.0 \times 10^{-3}$ mol/L or less at 25°C and a krafft point of 5°C or less and having a sulfonic acid group, a sulfate group or a salt of these substituents.

The critical micelle concentration of component (a) at 25°C is specifically $0.2 \times 10^{-3}$ mol/L or more and preferably $0.3 \times 10^{-3}$ mol/L or more, and $2.0 \times 10^{-3}$ mol/L or less, preferably $1.0 \times 10^{-3}$ mol/L or less, more preferably $0.7 \times 10^{-3}$ mol/L or less and more preferably $0.5 \times 10^{-3}$ mol/L or less from the viewpoint of inactivation effects on viruses.

While component (a) preferably has a smaller critical micelle concentration to increase lipophilicity from the viewpoint of inactivation effects on viruses, the critical micelle concentration preferably falls within the suitable range from the viewpoint that excessively increased lipophilicity leads to reduced inactivation effects on viruses.

As the critical micelle concentration of component (a) at 25°C, a value measured by the method below is used.

A $1 \times 10^{-3}$ mol/L ethanol solution of pyrene (FUJIFILM Wako Pure Chemical Corporation) is prepared in a brown screw cap tube, and 5 μl of the solution is placed in a screw cap tube (No. 3) and dried with dry air. 5 mL of an aqueous solution of component (a) to be measured (prepared with ion exchange water) is added thereto and processed with an ultrasonic cleaner for 15 minutes, and using this, fluorescence spectrum measurements are performed with a fluorescence spectrophotometer (for example, Fluorescence Spectrophotometer F-7000 (manufactured by Hitachi High-Tech Corporation)). Fluorescence intensities $I_1$ and $I_3$ at wavelengths $\lambda 1$ of 373 nm and $\lambda 3$ of 384 nm are measured under the measurement conditions below to calculate fluorescence intensity ratio $I_1/I_3$.

A graph is prepared on which the horizontal axis plots a concentration of component (a) and the vertical axis plots a fluorescence intensity ratio $I_1/I_3$ at each concentration, and a surfactant concentration at the midpoint between the maximum value and the minimum value of $I_1/I_3$ is taken as the critical micelle concentration.

### [Measurement conditions]

Excitation wavelength: 339 nm, slit on the excitation side: 10 mm, slit on the fluorescence side: 1 mm, scanning rate: 60 nm/min, liquid temperature: 25°C, measurement range: 350 to 400 nm

The krafft point of component (a) is 5°C or less from the viewpoint of having water solubility to exhibit inactivation effects on viruses even at low temperatures in winter.

As the krafft point of component (a), a value measured by the method below is used.

A solution obtained by diluting component (a) with ion exchange water to attain a total amount of 5 mL and a concentration of 0.2 mass% is prepared and placed in a glass test tube, and the fluorescent dye rhodamine 6G (FUJIFILM Wako Pure Chemical Corporation) is then added to attain a final concentration of 0.02 mM. The test tube is placed in an ice

bath, a temperature is raised at a temperature rise rate of 0.5°C/min, and a temperature at which the solution emits fluorescence is taken as the krafft point (absence of fluorescence: pink, presence of fluorescence: turns yellow, reference literature: see Studies on Krafft Point (Part 1), About Krafft Point Measurement Method Using Dyes, Takashi Ino, 79, 166 (1957)).

Examples of component (a) include, for example, one or more anionic surfactants selected from a sulfosuccinic acid ester salt, a benzene sulfonate, an internal olefin sulfonate, an α-olefin sulfonate, an alkane sulfonate, an α-sulfo fatty acid ester salt and an ether sulfate type having a specific linear or branched alkyl group. However, these anionic surfactants need to have a critical micelle concentration of $0.2 \times 10^{-3}$ mol/L or more and $2.0 \times 10^{-3}$ mol/L or less at 25°C and a krafft point of 5°C or less.

Examples of the salts of these include an alkali metal salt such as sodium, potassium or the like, an alkaline earth metal salt such as magnesium or the like, and an alkanol amine salt such as monoethanolamine or the like.

The alkyl benzene sulfonate of the above has an alkyl group with preferably 10 or more and 16 or less carbons and more preferably 12 or more and 16 or less carbons. Further, the alkyl chain particularly preferably has a structure with a branched chain from the viewpoint of being able to impart bactericidal effects at the same time.

The α-olefin sulfonate has preferably 10 or more and 20 or less carbons, more preferably 12 or more and 20 or less carbons, further preferably 14 or more and 18 or less carbons, furthermore preferably 16 or more and 18 or less carbons and particularly preferably 18 carbons.

The alkane sulfonate has preferably 10 or more and 20 or less carbons, more preferably 12 or more and 18 or less carbons and particularly preferably 14 or more and 18 or less carbons.

The α-sulfo fatty acid ester salt has preferably 10 or more and 20 or less carbons, more preferably 12 or more and 20 or less carbons and particularly preferably 14 or more and 18 or less carbons.

Among these, component (a) is preferably a sulfosuccinic acid alkyl ester salt, an internal olefin sulfonate, a benzene sulfonate or an α-olefin sulfonate having a specific alkyl group, and further, more preferably one or more selected from a sulfosuccinic acid alkyl ester salt and an internal olefin sulfonate for excellent viral inactivation effects.

Component (a) is preferably an anionic surfactant having a critical micelle concentration of $0.2 \times 10^{-3}$ mol/L or more and $2.0 \times 10^{-3}$ mol/L or less at 25°C and a krafft point of 5°C or less and having a sulfonic acid group or a salt thereof internally of a linear or branched hydrocarbon chain with 18 or more and 24 or less carbons optionally divided by an ester group. Further, component (a) is preferably one or more anionic surfactants selected from the following components (a1), (a2) and (a3) and more preferably one or more anionic surfactants selected from components (a1) and (a2),

component (a1): a sulfosuccinic acid branched alkyl ester or a salt thereof having a critical micelle concentration of $0.2 \times 10^{-3}$ mol/L or more and $2.0 \times 10^{-3}$ mol/L or less at 25°C and a krafft point of 5°C or less and having a branched alkyl group with 9 or more and 12 or less carbons,
component (a2): an internal olefin sulfonic acid or a salt thereof with 18 or more and 24 or less carbons having a critical micelle concentration of $0.2 \times 10^{-3}$ mol/L or more and $2.0 \times 10^{-3}$ mol/L or less at 25°C and a krafft point of 5°C or less, and
component (a3): an α-olefin sulfonate or a salt thereof with 18 carbons having a critical micelle concentration of $0.2 \times 10^{-3}$ mol/L or more and $2.0 \times 10^{-3}$ mol/L or less at 25°C and a krafft point of 5°C or less.

Component (a1) of the present invention is a sulfosuccinic acid branched alkyl ester or a salt thereof having a critical micelle concentration of $0.2 \times 10^{-3}$ mol/L or more and $2.0 \times 10^{-3}$ mol/L or less at 25°C and a krafft point of 5°C or less and having a branched alkyl group with 9 or more and 12 or less carbons.

Examples of the ester of component (a1) include a monoester and a diester. Component (a1) is preferably a sulfosuccinic acid branched alkyl diester in which the branched alkyl groups are branched alkyl groups with 9 or more and 12 or less carbons.

The branched alkyl group of component (a1) is preferably a branched alkyl group with 9 or 10 carbons and more preferably a branched alkyl group having a main chain with 6 or 7 carbons and one or more side chains, the side chains having 3 carbons in total.

The branched alkyl group of component (a1) is preferably a branched alkyl group selected from 2-propylheptyl group and 3,5,5-trimethylhexyl group.

Examples of component (a1) include a sulfosuccinic acid branched ester represented by the following general formula (a1):

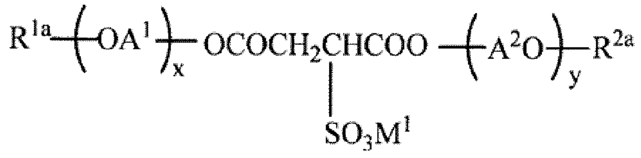

( a1 )

wherein $R^{1a}$ and $R^{2a}$ are each independently a branched alkyl group with 9 or more and 12 or less carbons, $A^1$ and $A^2$ are each independently an alkylene group with 2 or more and 4 or less carbons, x and y are average numbers of added moles and each independently 0 or more and 6 or less, and $M^1$ is a hydrogen atom or a cation.

Further, examples of component (a1) include a sulfosuccinic acid branched alkyl ester represented by the general formula (a1-1) below. This compound is a compound of the general formula (a1) in which x = 0 and y = 0.

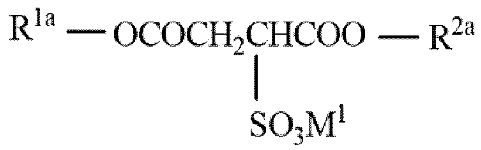

(a1-1)

wherein $R^{1a}$ and $R^{2a}$ are each independently a branched alkyl group with 9 or more and 12 or less carbons, and $M^1$ is a hydrogen atom or a cation.

The explanation below can be applied to each of the general formulas (a1) and (a1-1).

$R^{1a}$ and $R^{2a}$ may have the same or different numbers of carbons.

In the present invention, a hydrocarbon residue left after removal of a hydroxyl group from a secondary alcohol is included in an open-chain branched hydrocarbon group.

In the present invention, in each of the open-chain branched hydrocarbon groups of $R^{1a}$ and $R^{2a}$, a hydrocarbon chain whose carbon number is the largest when counted from a carbon atom bonded to an oxygen atom is considered to be a main chain, and a hydrocarbon chain branching off and bonded from the main chain is considered to be a side chain.

When there are two or more possible main chains, in other words, when there are two or more hydrocarbon chains having the largest number of carbons (hereinafter also referred to as the longest hydrocarbon chains), the main chain is determined in the following order:

1. a longest hydrocarbon chain from which a side chain with a larger number of carbon atoms branches off is considered to be the main chain;
2. next, when side chains branching off from the longest hydrocarbon chains have the same number of carbon atoms, a longest hydrocarbon chain from which a larger number of side chains branch off is considered to be the main chain;
3. next, when the same number of side chains branch off from the longest hydrocarbon chains, a longest hydrocarbon chain having a side chain at a carbon atom which is closer to the oxygen atom when counted from the carbon atom bonded to the oxygen atom is considered to be the main chain; and
4. next, when carbon atoms having a side chain closest to the oxygen atom are in the same position, a longest hydrocarbon chain having a larger number of carbon atoms in the side chain closest to the oxygen atom is considered to be the main chain.

Note that when there are two or more longest hydrocarbon chains having the same symmetric structure, both may be considered to be the main chain.

Total numbers of constituent carbons of side chains in the branched alkyl groups of $R^{1a}$ and $R^{2a}$ may be the same or different, and are preferably 3 from the viewpoints of improvement in water solubility and inactivation effects on viruses.

In the present invention, a total number of constituent carbons of a side chain is a total of carbon numbers of all side chains other than the main chain in one branched alkyl group, and when there are two or more side chains, it is a total of carbon numbers of all those side chains.

$R^{1a}$ and $R^{2a}$ may have the same or different numbers of side chains, and have 1 or more, and preferably 3 or less and more preferably 2 or less side chains from the viewpoints of improvement in water solubility and inactivation effects on viruses.

In the present invention, a number of side chains is a number of side chains branching off from the main chain, and even if a side chain further has a side chain branching off from the side chain, the number of side chains remains the same. However, a side chain may further have a side chain branching off from the side chain from the viewpoints of improvement in water solubility and inactivation effects on viruses.

$R^{1a}$ and $R^{2a}$ may have the same or different numbers of branch carbons, and have 1 or more, and preferably 3 or less and furthermore preferably 2 or less branch carbons from the viewpoints of improvement in water solubility and inactivation effects on viruses.

In the present invention, a number of branch carbons is a total of numbers of tertiary carbon atoms and quaternary carbon atoms in an open-chain branched hydrocarbon group.

In a preferable aspect of $R^{1a}$ and $R^{2a}$, the open-chain branched hydrocarbon groups of $R^{1a}$ and $R^{2a}$ each independently have 9 or more and 12 or less carbons and further 9 or 10 carbons in total, each independently have a main chain with 6 or 7 carbons, each independently have a side chain with 1 or more and 3 or less constituent carbons, and each

independently have one side chain.

Specific branched alkyl groups of $R^{1a}$ and $R^{2a}$ may be the same or different, and are each preferably a branched alkyl group selected from 2-propylheptyl group and 3,5,5-trimethylhexyl group.

In the general formula (a1), $A^1$ and $A^2$ are each independently an alkylene group with 2 or more carbons, and 4 or less and preferably 3 or less carbons.

In the general formula (a1), x and y are average numbers of added moles, and are each independently 0 or more, and 6 or less, preferably 4 or less, more preferably 2 or less and further preferably 0 from the viewpoint of inactivation effects on viruses.

Further, x + y is preferably 0 or more, and preferably 12 or less, more preferably 6 or less, further preferably 3 or less and furthermore preferably 0 from the viewpoint of inactivation effects on viruses.

In the general formula (a1), $M^1$ is a hydrogen ion, an inorganic cation such as a sodium ion, an ammonium ion, a potassium ion, a magnesium ion or the like, or an organic cation such as a monoethanolammonium ion, a diethanolammonium ion, a triethanolammonium ion, a morpholinium ion or the like, and is preferably an inorganic cation selected from a sodium ion, an ammonium ion, a potassium ion and a magnesium ion.

In the general formula (a1), a compound in which $R^{1a}$ and $R^{2a}$ are the same is produced by a preparation method not particularly limited and can be produced by referring to, for example, a method described in US-B 2,028,091, and an asymmetric compound in which $R^{1a}$ and $R^{2a}$ are different can be produced by referring to, for example, a preparation method in JP-A S58-24555. As a raw material of component (a1), a compound obtained by adding an alkylene oxide to an alcohol with a predetermined number of carbons can also be used.

Examples of a suitable alcohol used for producing component (a1) of the present invention include

(1) a primary alcohol, typically, 3,5,5-trimethylhexane-1-ol, 2-propylheptan-1-ol or the like, and
(2) a secondary alcohol, typically, 5-nonanol, 2,6-dimethyl-4-heptanol or the like.

Component (a2) of the present invention is an internal olefin sulfonic acid or a salt thereof with 18 or more and 24 or less carbons having a critical micelle concentration of $0.2 \times 10^{-3}$ mol/L or more and $2.0 \times 10^{-3}$ mol/L or less at 25°C and a krafft point of 5°C or less.

The internal olefin sulfonate with 18 or more and 24 or less carbons can be obtained by sulfonating an internal olefin with 18 or more and 24 or less carbons. The internal olefin refers to an olefin in which a double bond is present in a position more internal than position 2. The internal olefin can be obtained by, for example, isomerizing 1-olefin obtained by dehydrating 1-alcohol.

The internal olefin sulfonate has 18 or more, and 24 or less, preferably 22 or less and more preferably 20 or less carbons from the viewpoints of improvement in water solubility and inactivation effects on viruses. Note that the carbon number of the internal olefin sulfonate does not include a number of carbons in the portion of a salt. In other words, a carbon number of the olefin portion is the carbon number of the internal olefin sulfonate. That is, the carbon number of the internal olefin sulfonate refers to the carbon number of the internal olefin to which a sulfonic acid salt is covalently bonded.

Examples of the salt of the internal olefin sulfonate include an alkali metal salt, an alkaline earth metal (1/2 atom) salt, an ammonium salt or an organic ammonium salt. Examples of the alkali metal salt include a sodium salt and a potassium salt. Examples of the organic ammonium salt include an alkanolammonium salt with 1 or more and 6 or less carbons.

Depending on a production method, the internal olefin sulfonate may sometimes contain a trace amount of a so-called alfa-olefin sulfonate (hereinafter also referred to as an $\alpha$-olefin sulfonate) in which the position of a sulfonic acid salt is present in position 1 of the carbon chain. A content of the $\alpha$-olefin sulfonate in the internal olefin sulfonate is preferably 10 mass% or less, more preferably 7 mass% or less, further preferably 5 mass% or less and furthermore preferably 3 mass% or less as an upper limit of the content, and 0.01 mass% or more.

The internal olefin sulfonate can be obtained by sulfonating an olefin with 18 or more and 24 or less carbons in which a double bond is present in position 2 or more as a main component. When the internal olefin is sulfonated, a $\beta$-sultone is quantitatively produced and partially changes to a $\gamma$-sultone and an olefin sulfonic acid, which are further converted to a hydroxy alkane sulfonate and an olefin sulfonate in a neutralization/hydrolysis process (for example, J. Am. Oil Chem. Soc. 69, 39 (1992)). Here, the obtained hydroxy alkane sulfonate has a hydroxy group in an internal position of the alkane chain, and the olefin sulfonate has a double bond in an internal position of the olefin chain. Further, the obtained product is mainly a mixture of these, and may sometimes partially contain a trace amount of a hydroxy alkane sulfonate having a hydroxy group at the end of the carbon chain or an olefin sulfonate having a double bond at the end of the carbon chain.

As used herein, each of these products and a mixture thereof are collectively referred to as the internal olefin sulfonate. Further, as described above, the hydroxy alkane sulfonate is referred to as hydroxy species of the internal olefin sulfonate (HAS), and the olefin sulfonate is referred to as olefin species of the internal olefin sulfonate (IOS).

Note that mass ratios of compounds in the internal olefin sulfonate can be measured by HPLC-MS. Specifically,

the mass ratios can be determined from HPLC-MS peak areas of the internal olefin sulfonate, for example, by a method of the Examples described later.

The internal olefin sulfonate may contain hydroxy species and olefin species. A mass ratio of a content of olefin species of the internal olefin sulfonate to a content of hydroxy species of the internal olefin sulfonate in the internal olefin sulfonate (olefin species/hydroxy species) can be 0/100 or more and further 5/95 or more, and 50/50 or less, further 40/60 or less, further 30/70 or less and further 25/75 or less.

Component (a3) of the present invention is an α-olefin sulfonic acid or a salt thereof with 18 carbons having a critical micelle concentration of $0.2 \times 10^{-3}$ mol/L or more and $2.0 \times 10^{-3}$ mol/L or less at 25°C and a krafft point of 5°C or less.

The α-olefin sulfonate with 18 carbons can be obtained by sulfonating an α-olefin with 18 carbons. The α-olefin can be obtained by dehydrating 1-alcohol, for example, using a production method described in JP-A 2012-232944 or the like.

The α-olefin sulfonate has 18 carbons from the viewpoints of improvement in water solubility and inactivation effects on viruses. Note that the carbon number of the α-olefin sulfonate does not include a number of carbons in the portion of a salt. In other words, a carbon number of the olefin portion is the carbon number of the α-olefin sulfonate. That is, the carbon number of the α-olefin sulfonate refers to the carbon number of the α-olefin to which a sulfonic acid salt is covalently bonded.

Examples of the salt of the α-olefin sulfonate include an alkali metal salt, an alkaline earth metal (1/2 atom) salt, an ammonium salt or an organic ammonium salt. Examples of the alkali metal salt include a sodium salt and a potassium salt. Examples of the organic ammonium salt include an alkanolammonium salt with 1 or more and 6 or less carbons.

The α-olefin sulfonate is a mixture of a hydroxy alkane sulfonate (HAS) and an alkene sulfonate (AOS) in the same manner as in the internal olefin sulfonic acid. In other words, the α-olefin sulfonate is a compound having a sulfonic acid group at the end of the hydroxyalkyl group or alkenyl group.

In the α-olefin sulfonate, a mass ratio expressed as hydroxy alkane sulfonate/alkene sulfonate, (HAS)/(AOS), is preferably 70/30 or more and 60/40 or less.

The inactivating agent for enveloped viruses of the present invention contains component (a) as an effective component.

The inactivating agent for enveloped viruses of the present invention contains component (a) in the inactivating agent for enveloped viruses in an amount of preferably 0.01 mass% or more, more preferably 0.1 mass% or more, further preferably 0.3 mass% or more, further 1 mass% or more, further 5 mass% or more, further 10 mass% or more, further 25 mass% or more, further 50 mass% or more, further 75 mass% or more and further 90 mass% or more, and preferably 100 mass% or less from the viewpoint of viral inactivation performance.

The inactivating agent for enveloped viruses of the present invention may contain component (a) in an amount of 100 mass%. In other words, the present invention may be an inactivating agent for enveloped viruses composed of component (a).

Note that, in the present invention, a mass of component (a) is specified using a value expressed in terms of a sodium salt.

The inactivating agent for enveloped viruses of the present invention can contain another component other than component (a) in the range that the effect of the present invention is not impaired.

Examples of another component include water, a surfactant, a solvent, a chelating agent, an anti-foaming agent, a stabilizer, a pH adjuster, a colorant, a fragrance, an antiseptic or the like.

Enveloped viruses covered by the inactivating agent for enveloped viruses of the present invention refer to a single-stranded (+) RNA virus, a single-stranded (-) RNA virus, a double-stranded RNA virus, a single-stranded DNA virus and a double-stranded DNA virus having a lipid layer or a lipid bilayer on the viral surfaces.

Examples of the enveloped viruses include herpesvirus, influenza virus, paramyxovirus, rabies virus, respiratory syncytial virus, coronavirus, HIV, smallpox virus, hepatitis B virus, hepatitis C virus, hepatitis D virus, rubella virus, SARS coronavirus (SARS-CoV) and MERS coronavirus (MERS-CoV), phage virus or the like.

The inactivating agent for enveloped viruses of the present invention has high inactivation effects particularly on influenza virus and coronavirus.

An inactivation effect on an enveloped virus in the present specification is evaluated in a system in which host cells are infected with a specific virus treated with an inactivating agent to be evaluated. While details are described later, in this verification test, for example, under the condition of using a primary influenza virus of approximately $1 \times 10^7$ (FFU), a difference between logarithms of infectious titers of a control liquid (water only) and an evaluation liquid after treatment, ΔLOG (FFU/mL), indicates the inactivation effect in the present specification, and it is desirable that ΔLOG (FFU/mL) is preferably 1.0 or more, more preferably 2.0 or more and further preferably 3.0 or more.

The present invention provides use as an inactivating agent for enveloped viruses including, component (a) as an effective component.

Component (a) is the same as in the aspects descried in the inactivating agent for enveloped viruses of the

present invention.

The aspects described in the inactivating agent for enveloped viruses of the present invention can be appropriately applied to the use as an inactivating agent for enveloped viruses of the present invention.

[Inactivating composition for enveloped viruses]

The present invention provides an inactivating composition for enveloped viruses including, component (a) as an effective component, and including water.

In the present invention, a method of bringing the inactivating composition for enveloped viruses containing component (a) and water into contact with an object is preferable in terms of simplicity and inactivation effects.

Component (a) is the same as in the aspects descried in the inactivating agent for enveloped viruses of the present invention.

The inactivating composition for enveloped viruses of the present invention may be prepared by formulating it with the inactivating agent for enveloped viruses of the present invention. In other words, the present invention may be an inactivating composition for enveloped viruses including the inactivating agent for enveloped viruses of the present invention as an effective component and including water.

The aspects described in the inactivating agent for enveloped viruses of the present invention can be appropriately applied to the inactivating composition for enveloped viruses of the present invention.

The inactivating composition for enveloped viruses of the present invention contains component (a) in the composition in an amount of preferably 5 mass ppm or more, more preferably 10 mass ppm or more, further preferably 50 mass ppm or more and furthermore preferably 100 mass ppm or more from the viewpoint of inactivation effects on viruses, and preferably 300000 mass ppm or less, more preferably 30000 mass ppm or less, further preferably 20000 mass ppm or less, furthermore preferably 10000 mass ppm or less, furthermore preferably 1000 mass ppm or less, furthermore preferably 750 mass ppm or less, furthermore preferably 500 ppm or less, furthermore preferably 250 mass ppm or less and furthermore preferably 100 mass ppm or less from the viewpoints of economic efficiency and formulation stability. The inactivating composition for enveloped viruses of the present invention is preferable in that viruses can be inactivated in short time even at a low concentration of component (a) of preferably 10 mass ppm or more and 250 ppm or less and more preferably 10 mass ppm or more and 100 mass ppm or less.

The inactivating composition for enveloped viruses of the present invention contains water in the composition in an amount of preferably more than 50 mass%, more preferably more than 70 mass%, further preferably more than 80 mass% and particularly preferably more than 85 mass%, and preferably less than 99.99 mass%, more preferably less than 99.9 mass%, further preferably less than 99.7 mass%, furthermore preferably less than 98 mass% and particularly preferably less than 96 mass%.

A hardness of water contained in the inactivating composition for enveloped viruses of the present invention is preferably 0°DH or more, and preferably 4°DH or less, more preferably 2°DH or less and further preferably 1°DH or less by German hardness from the viewpoint of storage stability. The inactivating composition for enveloped viruses of the present invention is most preferably free of water containing hardness components in terms of solution stability of the composition.

Here, German hardness (°dH) herein refers to a concentration of calcium and magnesium in water expressed in terms of a $CaCO_3$ concentration, and 1 mg/L (ppm) = approximately 0.056°dH (1°dH = 17.8 ppm). This concentration of calcium and magnesium for German hardness is determined by a chelate titration method using an ethylenediaminetetraacetic acid disodium salt.

A specific method for measuring the German hardness of water herein is described below.

<Method for measuring German hardness of water>

[Reagent]

· 0.01 mol/l EDTA·2Na solution: a 0.01 mol/l aqueous solution of disodium ethylenediaminetetraacetate (the titration solution 0.01 M EDTA-Na2 manufactured by Sigma-Aldrich)

- · Indicator Universal BT (product name: Universal BT manufactured by DOJINDO LABORATORIES)
- · Ammonia buffer solution for hardness measurements (a solution obtained by dissolving 67.5 g of ammonium chloride in 570 ml of 28 w/v% ammonia water and making the total amount 1000 ml with ion exchange water)

[Measurement of hardness]

(1) 20 ml of water as a sample is collected in a conical beaker with a volumetric pipette.
(2) 2 ml of the ammonia buffer solution for hardness measurements is added.
(3) 0.5 ml of the indicator Universal BT is added. It is confirmed that the solution after the addition is reddish purple.
(4) While the conical beaker is shaken well, the 0.01 mol/l EDTA.2Na solution is added dropwise from a burette, and the point of time when the water as a sample turns blue is taken as the end point of titration.
(5) The total hardness is determined by the following calculation formula:

$$\text{Hardness } (^\circ dH) = T \times 0.01 \times F \times 56.0774 \times 100/A$$

T: the titration amount of the 0.01 mol/l EDTA·2Na solution (mL)
A: the volume of the sample (20 mL, the volume of the water as a sample)
F: a factor for the 0.01 mol/l EDTA·2Na solution

When the inactivating composition for enveloped viruses of the present invention is used in the method of bringing the composition into contact with an object, the composition can contain (b) a surfactant [excluding component (a)] [hereinafter referred to as component (b)] in terms of wettability on the object and permeation performance.

Examples of component (b) include, for example, one or more selected from (b1) an anionic surfactant [excluding component (a)] [hereinafter referred to as component (b1)], (b2) a nonionic surfactant [hereinafter referred to as component (b2)], (b3) a semipolar surfactant [hereinafter referred to as component (b3)] and (b4) an amphoteric surfactant [hereinafter referred to as component (b4)].

Examples of component (b1) include one or more selected from an alkyl sulfate having an alkyl group with 8 or more and 22 or less carbons, an alkyl benzene sulfonic acid having an alkyl group with 8 or more and 22 or less carbons, a polyoxyalkylene alkyl ether sulfate having an alkyl group with 8 or more and 22 or less carbons (in which the oxyalkylene group is an oxyalkylene group with 2 or 3 carbons and preferably an oxyethylene group, and an average number of added moles of the oxyalkylene group is 0.5 or more and 5 or less and preferably 0.5 or more and 3 or less), a fatty acid with 8 or more and 22 or less carbons and salts of these.

Examples of component (b2) include one or more selected from a polyoxyalkylene alkyl ether having an alkyl group with 8 or more and 22 or less carbons (in which the oxyalkylene group is an oxyalkylene group with 2 or 3 carbons and preferably an oxyethylene group, and an average number of added moles of the oxyalkylene group is 3 or more and 50 or less and preferably 3 or more and 20 or less) and an alkyl glycoside having an alkyl group with 8 or more and 22 or less carbons (in which an average degree of condensation of a sugar backbone such as glucose or the like is 1 or more and 5 or less and preferably 1 or more and 2 or less).

Examples of component (b3) include an amine oxide-type surfactant having one or more and preferably one alkyl group with 8 or more and 22 or less carbons.

Examples of component (b4) include a sulfobetaine-type surfactant having one or more and preferably one alkyl group with 8 or more and 22 or less carbons or a carbobetaine-type surfactant having one or more and preferably one alkyl group with 8 or more and 22 or less carbons.

The inactivating composition for enveloped viruses of the present invention contains component (b) in the composition in an amount of preferably 0.05 mass% or more, more preferably 0.1 mass% or more, further preferably 1 mass% or more and furthermore preferably 3 mass% or more, and preferably 60 mass% or less, more preferably 30 mass% or less, further preferably 20 mass% or less, furthermore preferably 10 mass% or less and furthermore preferably 5 mass% or less from the viewpoint of attaining both solubility and viral inactivation effects.

Note that, in the present invention, when component (b1) is used as component (b), a mass of component (b1) is specified using a value expressed in terms of a sodium salt.

When the inactivating composition for enveloped viruses of the present invention contains component (b), a mass ratio of a content of component (a) to a content of component (b), (a)/(b), is preferably 0.01 or more, more preferably 0.05 or more, further preferably 0.1 or more and furthermore preferably 0.2 or more, and preferably 15 or less, more preferably 10 or less and further preferably 5 or less from the viewpoint of viral inactivation effect performance or the ability to remove adherent dirt.

The inactivating composition for enveloped viruses of the present invention can contain (c) a water-soluble organic solvent [hereinafter referred to as component (c)] in terms of wettability on objects and permeation performance.

The water-soluble organic solvent of the present invention refers to a compound soluble in an amount of 20 g or more in 100 g of ion exchange water at 20°C.

Examples of component (c) can include one or more selected from (c1) a polyhydric alcohol with 2 or more and 4 or less carbons [hereinafter referred to as component (c1)], (c2) a di or trialkylene glycol having an alkylene glycol unit with 2 or more and 4 or less carbons [hereinafter referred to as component (c2)] and (c3) a monoalkoxy (methoxy, ethoxy, propoxy, butoxy) ether or a phenoxy or benzoxy ether of a di to tetraalkylene glycol having an alkylene glycol unit with 2 or

more and 4 or less carbons [hereinafter referred to as component (c3)].

Component (c) is preferably a water-soluble organic solvent with 2 or more carbons and preferably 3 or more carbons, and 12 or less carbons and preferably 8 or less carbons.

Specifically, examples of component (c1) include ethylene glycol, propylene glycol, glycerin and isoprene glycol, examples of component (c2) include diethylene glycol and dipropylene glycol, and examples of component (c3) include propylene glycol monomethyl ether, propylene glycol monoethyl ether, diethylene glycol monobutyl ether (which is also referred to as butyldiglycol or the like), phenoxy ethanol, phenoxy triethylene glycol and phenoxy isopropanol, and one or two or more of these can be used. Component (c) is preferably one or more water-soluble organic solvents selected from propylene glycol, dipropylene glycol, diethylene glycol monobutyl ether, phenoxy ethanol, phenyl glycol and phenoxy isopropanol. Component (c) preferably has an alkoxy group, and is more preferably diethylene glycol monobutyl ether.

Note that, while a monohydric alcohol with 1 or more and 3 or less carbons [hereinafter referred to as component (c4)], which is a water-soluble organic solvent, is used as bactericidal or disinfecting alcohols and attains bactericidal effects when contained at high concentrations, it is desirable that mildness be ensured from a formulation perspective considering uses as commercial products frequently brought into contact with the human body such as skin or the like.

In the inactivating composition for enveloped viruses of the present invention, a content of component (c4) is preferably 50 mass% or less, more preferably 30 mass% or less, further preferably 10 mass% or less, furthermore preferably 5 mass% or less, furthermore preferably 1 mass% or less, furthermore preferably 0.5 mass% or less, furthermore preferably 0.1 mass% or less, furthermore preferably 0.01 mass% or less and furthermore preferably 0.001 mass% or less from the viewpoint of mildness to skin. Further, the inactivating composition for enveloped viruses of the present invention may contain no alcohol with 1 or more and 3 or less carbons.

The inactivating composition for enveloped viruses of the present invention can contain component (c) (excluding component (c4)), particularly components (c1) to (c3) in the composition in an amount of preferably 0.1 mass% or more, more preferably 0.2 mass% or more, further preferably 0.5 mass% or more, furthermore preferably 1 mass% or more and furthermore preferably 3 mass% or more, and preferably 50 mass% or less, more preferably 30 mass%, further preferably 10 mass% or less and furthermore preferably 7 mass% or less.

The inactivating composition for enveloped viruses of the present invention has high inactivation effects on enveloped viruses even if it does not contain a bactericidal agent such as a cationic surfactant or the like.

When a bactericidal agent is used in combination, specific examples of the bactericidal agent include one or more selected from a quaternary ammonium salt compound such as benzalkonium chloride, benzalkonium alkyl phosphates, benzethonium chloride, cetylpyridinium chloride or the like, triclosan, isopropyl methylphenol, resorcin, trichlorocarbanilide, chlorhexidine chloride, chlorhexidine gluconate, hydrogen peroxide, povidone iodine and iodine tincture.

The inactivating composition for enveloped viruses of the present invention may reduce the enveloped virus inactivation effects of the present invention when containing bactericidal agents and further the above bactericidal agents, particularly the cationic bactericidal agents, and thus, caution is required for use thereof. In the inactivating composition for enveloped viruses of the present invention, a content of a bactericidal agent is preferably 5 mass% or less, more preferably 1 mass% or less, further preferably 0.1 mass% or less, furthermore preferably 0.01 mass% or less and furthermore preferably 0.0001 mass% or less. Further, the inactivating composition for enveloped viruses of the present invention may contain no bactericidal agent.

The inactivating composition for enveloped viruses of the present invention can contain a component such as, for example, an inorganic salt, an inorganic acid, a chelating agent, a fragrance (natural fragrance, synthetic fragrance), a thickener, a gelling agent, a polymeric compound (dispersant), a hydrotropic agent, a moisture retention agent, a preservative, an antioxidant, a photostabilizer, an antiseptic, a buffer or the like in the range that the effects of the present invention are not impaired.

The inactivating composition for enveloped viruses of the present invention has high inactivation effects on enveloped viruses even if a pH is in the region of acidity to alkalinity.

In the inactivating composition for enveloped viruses of the present invention, a pH at 25°C measured by a glass electrode method can be selected from 0 or more, further 1 or more, further 2 or more, further 3 or more and further 4 or more, and 11 or less, further 9 or less, further 8 or less and further 7 or less from the viewpoint of irritation to skin.

The inactivating composition for enveloped viruses of the present invention can be used, for example, in liquid form, gel form or paste form. The inactivating composition for enveloped viruses of the present invention can appropriately contain a solubilization carrier such as water, a solvent or the like, a gelling agent or the like according to those forms of use.

Uses of the inactivating composition for enveloped viruses of the present invention can cover (1) use on the body, for example, use on human skin, hands and fingers, hair, oral cavity and others, (2) use on food, for example, use on the surface of a food material such as a vegetable or the like and others, (3) use on a hard article, or (4) use on textile products, for example, use on a fiber material such as cloth, thread or the like and a product produced using them and others. Examples of the hard article include a hard article having a hard surface such as, for example, a bathroom, a toilet, a kitchen, a floor, a doorknob, tableware, food processing equipment, a desk, a chair, a wall or the like. These hard articles may be those used in households or those used in public facilities or plants, for example, a pool, a bathhouse, a dining

lounge, a hospital and others.

Enveloped viruses covered by the inactivating composition for enveloped viruses of the present invention are the same as the enveloped viruses listed in the inactivating agent for enveloped viruses of the present invention.

<Method for inactivating enveloped viruses>

The present invention provides a method for inactivating enveloped viruses including, bringing the inactivating composition for enveloped viruses of the present invention into contact with a surface of interest on which enveloped viruses are present.

Further, the present invention provides a method for inactivating enveloped viruses including, diluting the inactivating composition for enveloped viruses of the present invention with water containing Ca and/or Mg to obtain a mixed liquid (hereinafter referred to as the mixed liquid of the present invention), and bringing the mixed liquid into contact with a surface of interest on which enveloped viruses are present.

The aspects described in the inactivating agent for enveloped viruses of the present invention and the inactivating composition for enveloped viruses of the present invention can be appropriately applied to the method for inactivating enveloped viruses.

The surface of interest in the method for inactivating enveloped viruses of the present invention can cover (1) the body, for example, human skin, hands and fingers, hair, oral cavity and others, (2) food, for example, the surface of a food material such as a vegetable or the like and others, (3) a hard article, or (4) textile products, for example, a fiber material such as cloth, thread or the like and a product produced using them and others. Examples of the hard article include a hard article having a hard surface such as, for example, a bathroom, a toilet, a kitchen, a floor, a doorknob, tableware, food processing equipment, a desk, a chair, a wall or the like. These hard articles may be those used in households or those used in public facilities or plants, for example, a pool, a bathhouse, a dining lounge, a hospital and others.

Examples of a method for bringing the inactivating composition for enveloped viruses of the present invention or the mixed liquid of the present invention into contact with the surface of interest on which enveloped viruses are present include a method for spraying or applying the inactivating composition for enveloped viruses of the present invention or the mixed liquid of the present invention to the surface of interest on which enveloped viruses are present or considered to be present, or a method for immersing the surface of interest, for example, a textile product in the inactivating composition for enveloped viruses of the present invention or the mixed liquid of the present invention. Further, non-woven fabric may be impregnated with the inactivating composition for enveloped viruses of the present invention or the mixed liquid of the present invention and brought into contact with the surface of interest.

When the inactivating composition for enveloped viruses of the present invention or the mixed liquid of the present invention is sprayed or applied to the surface of interest, the inactivating composition for enveloped viruses of the present invention or the mixed liquid of the present invention may be filled into a container provided with a sprayer and sprayed in liquid droplet form or foam form, or the inactivating composition for enveloped viruses of the present invention or the mixed liquid of the present invention may be flowed from a container onto the surface of interest and applied with a brush or the like.

Examples of the container provided with a sprayer include a manual spray device using no propellant, such as a trigger-type spray container, a pump-type spray container or the like, an aerosol using a propellant, and others.

The container provided with a sprayer is preferably a trigger-type spray capable of spraying the contents in liquid droplet form or foam form, and more preferably a trigger-type spray provided with a mechanism for spraying the contents in liquid droplet form or a trigger-type spray provided with a mechanism for forming foam (foam forming mechanism).

When the surface of interest, for example, a textile product is immersed in the inactivating composition for enveloped viruses of the present invention or the mixed liquid of the present invention, the surface of interest and the inactivating composition for enveloped viruses of the present invention or the mixed liquid of the present invention may be left to stand or may be agitated during immersion. When they are agitated, they may be agitated manually or with a rotary agitator. The rotary agitator is equipment for performing agitation by rotating the surface of interest and the inactivating composition for enveloped viruses of the present invention or the mixed liquid of the present invention about a rotation axis. The rotary agitator may perform agitation only in a constant direction or may also perform agitation in the opposite direction. Further, agitation can be performed continuously or intermittently.

Examples of a rotary agitator available to a user include, for example, a pulsator-type washing machine, an agitator-type washing machine or a drum-type washing machine.

While the mixed liquid of the present invention is obtained by diluting the inactivating composition for enveloped viruses of the present invention with water containing Ca and/or Mg, the mixed liquid can exhibit inactivation effects on viruses even at a low concentration of component (a) by containing water containing the hardness components Ca and/or Mg.

A hardness of water used for the dilution in the present invention is preferably 1°DH or more and more preferably 3°DH or more, and preferably 20°DH or less, more preferably 10°DH or less and further preferably 8°DH or less by German

hardness from the viewpoint of improving viral inactivation effects.

When the inactivating composition for enveloped viruses of the present invention is diluted with water containing Ca and/or Mg to prepare the mixed liquid, a dilution ratio is preferably 5000 times or less, more preferably 1000 times or less, further preferably 500 times or less, furthermore preferably 100 times or less and furthermore preferably 50 times or less from the viewpoint of enveloped virus inactivation performance.

While a pH of the mixed liquid of the present invention can be arbitrarily set depending on uses and is not particularly limited, inactivation effects on enveloped viruses increase when it is more acidic.

In the mixed liquid of the present invention, a pH at 25°C measured by a glass electrode method can be selected from 11 or less, preferably 9 or less, more preferably 7 or less and further preferably 5 or less from the viewpoint of viral inactivation effects.

When non-woven fabric is impregnated with the inactivating composition for enveloped viruses of the present invention or the mixed liquid of the present invention and brought into contact with the surface of interest, non-woven fabric processed into sheet form can be used, and a fiber constituting the non-woven fabric is preferably made of one or more fibers selected from a hydrophilic fiber and a hydrophobic fiber.

In the present invention, the hydrophilic fiber refers to a fiber whose moisture content under standard conditions (20°C, 65%RH) is more than 5 mass%. Note that the moisture content under standard conditions is measured by a method specified in JIS L 1013 or JIS L 1015. Further, the hydrophobic fiber refers to a fiber whose moisture content under standard conditions (20°C, 65%RH) is 5 mass% or less.

The contact with the surface of interest may be made by a method including, pressing the non-woven fabric impregnated with the inactivating composition for enveloped viruses of the present invention or the mixed liquid of the present invention onto the surface of interest, and applying external force in the range that the object is not damaged to transfer the inactivating composition for enveloped viruses of the present invention or the mixed liquid of the present invention with which the non-woven fabric is impregnated to the surface of interest, wherein the external force may be applied by any of scrubbing, rubbing and tapping.

When the inactivating composition for enveloped viruses of the present invention or the mixed liquid of the present invention is used for the body, it can be used, for example, as a washing agent for hands and fingers such as a hand soap or the like, a body shampoo or a hair shampoo, and is preferably used as a washing agent for hands and fingers such as a hand soap or the like.

Further, the inactivating composition for enveloped viruses of the present invention or the mixed liquid of the present invention can be used by directly applying it to the human body, a pet or the like as a medical product when obtained in gel form or paste form using a water-soluble gel or an oily gel, or can be used as a filter for an air purifier by carrying it on paper, non-woven fabric or the like.

A use amount of the inactivating composition for enveloped viruses of the present invention or the mixed liquid of the present invention is not particularly limited, but can be, for example, preferably 0.01 g or more and more preferably 0.1 g or more, and preferably 1 g or less and more preferably 10 g or less as an amount of component (a) per $m^2$ of a unit area of an object from the viewpoints of viral inactivation performance and finishing performance after use.

A period of time during which the inactivating composition for enveloped viruses of the present invention or the mixed liquid of the present invention is brought into contact with the surface of interest on which enveloped viruses are present (a period of time during which they are left alone) is preferably 30 seconds or more, more preferably 1 minute or more and further preferably 5 minutes or more, and preferably 120 minutes or less, more preferably 60 minutes or less and further preferably 10 minutes or less from the viewpoint of viral inactivation performance.

After brought into contact, the composition or the liquid may be dried as-is, wiped off with clean cloth or the like, or rinsed with water. At the time of rinsing, external force (physical force) may be applied with a sponge or the like, or it may be simply rinsed with a stream of water.

<Aspects of the present invention>

The aspects of the present invention are illustrated below. Descriptions of the inactivating agent for enveloped viruses, the inactivating composition for enveloped viruses including the same and the method for inactivating enveloped viruses of the present invention can be modified as necessary and applied to these aspects. Further, descriptions of each aspect can be modified as necessary and applied to another aspect.

<1> An inactivating agent for enveloped viruses including, as an effective component, (a) an anionic surfactant (hereinafter referred to as component (a)) having a critical micelle concentration of $0.2 \times 10^{-3}$ mol/L or more and $2.0 \times 10^{-3}$ mol/L or less at 25°C and a krafft point of 5°C or less and having a sulfonic acid group, a sulfate group or a salt of these substituents.

<2> The inactivating agent for enveloped viruses according to <1>, wherein component (a) is one or more anionic surfactants selected from a sulfosuccinic acid ester salt, a benzene sulfonate, an internal olefin sulfonate, an $\alpha$-olefin

sulfonate, an alkane sulfonate, an α-sulfo fatty acid ester salt and an ether sulfate type having a specific linear or branched alkyl group.

<3> The inactivating agent for enveloped viruses according to <1> or <2>, wherein component (a) is one or more selected from a sulfosuccinic acid alkyl ester salt and an internal olefin sulfonate.

<4> The inactivating agent for enveloped viruses according to any of <1> to <3>, wherein the salt of component (a) is selected from an alkali metal salt such as sodium, potassium or the like, an alkaline earth metal salt such as magnesium or the like and an alkanol amine salt such as monoethanolamine or the like.

<5> The inactivating agent for enveloped viruses according to any of <1> to <4>, wherein component (a) is an anionic surfactant having a critical micelle concentration of $0.2 \times 10^{-3}$ mol/L or more and $2.0 \times 10^{-3}$ mol/L or less at 25°C and a krafft point of 5°C or less and having a sulfonic acid group or a salt thereof internally of a linear or branched hydrocarbon chain with 18 or more and 24 or less carbons optionally divided by an ester group.

<6> The inactivating agent for enveloped viruses according to any of <1> to <5>, wherein component (a) is one or more anionic surfactants selected from the following components (a1), (a2) and (a3) and preferably one or more anionic surfactants selected from components (a1) and (a2),

component (a1): a sulfosuccinic acid branched alkyl ester or a salt thereof having a critical micelle concentration of $0.2 \times 10^{-3}$ mol/L or more and $2.0 \times 10^{-3}$ mol/L or less at 25°C and a krafft point of 5°C or less and having a branched alkyl group with 9 or more and 12 or less carbons,

component (a2): an internal olefin sulfonic acid or a salt thereof with 18 or more and 24 or less carbons having a critical micelle concentration of $0.2 \times 10^{-3}$ mol/L or more and $2.0 \times 10^{-3}$ mol/L or less at 25°C and a krafft point of 5°C or less, and

component (a3): an α-olefin sulfonate or a salt thereof with 18 carbons having a critical micelle concentration of $0.2 \times 10^{-3}$ mol/L or more and $2.0 \times 10^{-3}$ mol/L or less at 25°C and a krafft point of 5°C or less.

<7> The inactivating agent for enveloped viruses according to <6>, wherein component (a1) is a sulfosuccinic acid branched alkyl diester in which the branched alkyl groups are branched alkyl groups with 9 or more and 12 or less carbons.

<8> The inactivating agent for enveloped viruses according to <6> or <7>, wherein the branched alkyl group of component (a1) is a branched alkyl group having a main chain with 6 or 7 carbons and one or more side chains, the side chains having 3 carbons in total.

<9> The inactivating agent for enveloped viruses according to any of <6> to <8>, wherein the branched alkyl group of component (a1) is a branched alkyl group selected from 2-propylheptyl group and 3,5,5-trimethylhexyl group.

<10> The inactivating agent for enveloped viruses according to any of <6> to <9>, wherein component (a1) is a sulfosuccinic acid branched ester represented by the following general formula (a1):

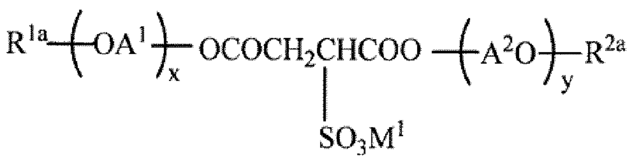

(a1)

wherein $R^{1a}$ and $R^{2a}$ are each independently a branched alkyl group with 9 or more and 12 or less carbons, $A^1$ and $A^2$ are each independently an alkylene group with 2 or more and 4 or less carbons, x and y are average numbers of added moles and each independently 0 or more and 6 or less, and $M^1$ is a hydrogen atom or a cation.

<11> The inactivating agent for enveloped viruses according to any of <6> to <10>, wherein component (a1) is a sulfosuccinic acid branched alkyl ester represented by the following general formula (a1-1):

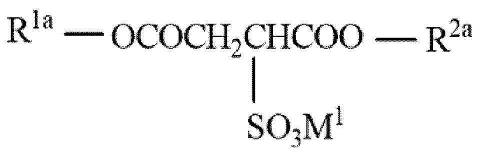

(a1-1)

wherein $R^{1a}$ and $R^{2a}$ are each independently a branched alkyl group with 9 or more and 12 or less carbons, and $M^1$ is a hydrogen atom or a cation.

<12> The inactivating agent for enveloped viruses according to any of <1> to <11>, wherein, in the general formula (a1) or (a1-1), $R^{1a}$ and $R^{2a}$ have the same or different numbers of side chains, and have 1 or more, and preferably 3 or less and more preferably 2 or less side chains.

<13> The inactivating agent for enveloped viruses according to any of <10> to <12>, wherein, in the general formula (a1) or (a1-1), $R^{1a}$ and $R^{2a}$ have the same or different numbers of branch carbons, and have 1 or more, and preferably 3 or less and more preferably 2 or less branch carbons.

<14> The inactivating agent for enveloped viruses according to any of <10> to <13>, wherein, in the general formula (a1) or (a1-1), the open-chain branched hydrocarbon groups of $R^{1a}$ and $R^{2a}$ each independently have 9 or 10 carbons in total, each independently have a main chain with 6 or 7 carbons, each independently have a side chain with 1 or more and 3 or less constituent carbons, and each independently have one side chain.

<15> The inactivating agent for enveloped viruses according to any of <10> to <14>, wherein, in the general formula (a1) or (a1-1), the branched alkyl groups of $R^{1a}$ and $R^{2a}$ are the same or different branched alkyl groups selected from 2-propylheptyl group and 3,5,5-trimethylhexyl group.

<16> The inactivating agent for enveloped viruses according to any of <6> to <15>, wherein component (a2) is obtained by sulfonating an internal olefin with 18 or more and 24 or less carbons.

<17> The inactivating agent for enveloped viruses according to any of <6> to <16>, wherein the salt of component (a2) is selected from an alkali metal salt, an alkaline earth metal (1/2 atom) salt, an ammonium salt and an organic ammonium salt, and preferably selected from a sodium salt, a potassium salt and an alkanolammonium salt with 1 or more and 6 or less carbons.

<18> The inactivating agent for enveloped viruses according to any of <6> to <17>, wherein a content of an alfa-olefin sulfonate in component (a2) is 10 mass% or less, more preferably 7 mass% or less, further preferably 5 mass% or less and furthermore preferably 3 mass% or less, and 0.01 mass% or more.

<19> The inactivating agent for enveloped viruses according to any of <6> to <18>, wherein the internal olefin sulfonate of component (a2) is a mixture of hydroxy species and olefin species, and a mass ratio of a content of olefin species to a content of hydroxy species is 0/100 or more and further 5/95 or more, and 50/50 or less, further 40/60 or less, further 30/70 or less and further 25/75 or less.

<20> The inactivating agent for enveloped viruses according to any of <6> to <19>, wherein component (a3) can be obtained by sulfonating an $\alpha$-olefin with 18 carbons.

<21> The inactivating agent for enveloped viruses according to any of <6> to <20>, wherein the salt of component (a3) is selected from an alkali metal salt, an alkaline earth metal (1/2 atom) salt, an ammonium salt and an organic ammonium salt, and preferably selected from a sodium salt, a potassium salt and an alkanolammonium salt with 1 or more and 6 or less carbons.

<22> The inactivating agent for enveloped viruses according to any of <6> to <21>, wherein component (a3) is a mixture of hydroxy species and olefin species, and a mass ratio expressed as hydroxy alkane sulfonate/alkene sulfonate in component (a3), (HAS)/(AOS), is 70/30 or more and 60/40 or less.

<23> The inactivating agent for enveloped viruses according to any of <1> to <22>, wherein component (a) is included in an amount of preferably 0.01 mass% or more, more preferably 0.1 mass% or more, further preferably 0.3 mass% or more, further 1 mass% or more, further 5 mass% or more, further 10 mass% or more, further 25 mass% or more, further 50 mass% or more, further 75 mass% or more and further 90 mass% or more, and preferably 100 mass% or less.

<24> The inactivating agent for enveloped viruses according to any of <1> to <23>, wherein the agent is composed of component (a).

<25> The inactivating agent for enveloped viruses according to any of <1> to <24>, wherein enveloped viruses of interest are a single-stranded (+) RNA virus, a single-stranded (-) RNA virus, a double-stranded RNA virus, a single-stranded DNA virus and a double-stranded DNA virus having a lipid layer or a lipid bilayer on the viral surfaces.

<26> The inactivating agent for enveloped viruses according to any of <1> to <25>, wherein an enveloped virus of interest is selected from herpesvirus, influenza virus, paramyxovirus, rabies virus, respiratory syncytial virus, coronavirus, HIV, smallpox virus, hepatitis B virus, hepatitis C virus, hepatitis D virus, rubella virus, SARS coronavirus (SARS-CoV) and MERS coronavirus (MERS-CoV), and phage virus, and preferably selected from influenza virus and coronavirus.

<27> An inactivating composition for enveloped viruses including, as an effective component, (a) an anionic surfactant (hereinafter referred to as component (a)) having a critical micelle concentration of $0.2 \times 10^{-3}$ mol/L or more and $2.0 \times 10^{-3}$ mol/L or less at 25°C and a krafft point of 5°C or less and having a sulfonic acid group, a sulfate group or a salt of these substituents, and further including water.

<28> An inactivating composition for enveloped viruses including, the inactivating agent for enveloped viruses according to any of <1> to <26> as an effective component, and including water.

<29> The inactivating composition for enveloped viruses according to <27> or <28>, wherein component (a) is included in an amount of preferably 5 mass ppm or more, more preferably 10 mass ppm or more, further preferably 50 mass ppm or more and furthermore preferably 100 mass ppm or more, and from the viewpoints of economic efficiency and formulation stability, preferably 300000 mass ppm or less, more preferably 30000 mass ppm or less, further preferably 20000 mass ppm or less, furthermore preferably 10000 mass ppm or less, furthermore preferably 1000

mass ppm or less, furthermore preferably 750 mass ppm or less, furthermore preferably 500 ppm or less, furthermore preferably 250 mass ppm or less and furthermore preferably 100 mass ppm or less.

<30> The inactivating composition for enveloped viruses according to any of <27> to <29>, wherein water is included in an amount of preferably more than 50 mass%, more preferably more than 70 mass%, further preferably more than 80 mass% and particularly preferably more than 85 mass%, and preferably less than 99.99 mass%, more preferably less than 99.9 mass%, further preferably less than 99.7 mass%, furthermore preferably less than 98 mass% and particularly preferably less than 96 mass%.

<31> The inactivating composition for enveloped viruses according to any of <27> to <30>, wherein a hardness of the water is preferably 0°DH or more, and preferably 4°DH or less, more preferably 2°DH or less and further preferably 1°DH or less by German hardness.

<32> The inactivating composition for enveloped viruses according to any of <27> to <31>, wherein one or more selected from (b1) an anionic surfactant [excluding component (a)] [hereinafter referred to as component (b1)], (b2) a nonionic surfactant [hereinafter referred to as component (b2)], (b3) a semipolar surfactant [hereinafter referred to as component (b3)] and (b4) an amphoteric surfactant [hereinafter referred to as component (b4)] are further included as component (b).

<33> The inactivating composition for enveloped viruses according to <32>, wherein component (b1) is one or more selected from an alkyl sulfate having an alkyl group with 8 or more and 22 or less carbons, an alkyl benzene sulfonic acid having an alkyl group with 8 or more and 22 or less carbons, a polyoxyalkylene alkyl ether sulfate having an alkyl group with 8 or more and 22 or less carbons (in which the oxyalkylene group is an oxyalkylene group with 2 or 3 carbons and preferably an oxyethylene group, and an average number of added moles of the oxyalkylene group is 0.5 or more and 5 or less and preferably 0.5 or more and 3 or less), a fatty acid with 8 or more and 22 or less carbons and salts of these.

<34> The inactivating composition for enveloped viruses according to <32> or <33>, wherein component (b2) is one or more selected from a polyoxyalkylene alkyl ether having an alkyl group with 8 or more and 22 or less carbons (in which the oxyalkylene group is an oxyalkylene group with 2 or 3 carbons and preferably an oxyethylene group, and an average number of added moles of the oxyalkylene group is 3 or more and 50 or less and preferably 3 or more and 20 or less) and an alkyl glycoside having an alkyl group with 8 or more and 22 or less carbons (in which an average degree of condensation of a sugar backbone such as glucose or the like is 1 or more and 5 or less and preferably 1 or more and 2 or less).

<35> The inactivating composition for enveloped viruses according to any of <32> to <34>, wherein component (b3) is an amine oxide-type surfactant having one or more and preferably one alkyl group with 8 or more and 22 or less carbons.

<36> The inactivating composition for enveloped viruses according to any of <32> to <35>, wherein component (b4) is a sulfobetaine-type surfactant having one or more and preferably one alkyl group with 8 or more and 22 or less carbons or a carbobetaine-type surfactant having one or more and preferably one alkyl group with 8 or more and 22 or less carbons.

<37> The inactivating composition for enveloped viruses according to any of <32> to <36>, wherein component (b) is included in an amount of preferably 0.05 mass% or more, more preferably 0.1 mass% or more, further preferably 1 mass% or more and furthermore preferably 3 mass% or more, and preferably 60 mass% or less, more preferably 30 mass% or less, further preferably 20 mass% or less, furthermore preferably 10 mass% or less and furthermore preferably 5 mass% or less.

<38> The inactivating composition for enveloped viruses according to any of <32> to <37>, wherein a mass ratio of a content of component (a) to a content of component (b), (a)/(b), is preferably 0.01 or more, more preferably 0.05 or more, further preferably 0.1 or more and furthermore preferably 0.2 or more, and preferably 15 or less, more preferably 10 or less and further preferably 5 or less.

<39> The inactivating composition for enveloped viruses according to any of <27> to <38>, wherein (c) a water-soluble organic solvent [hereinafter referred to as component (c)] is further included.

<40> The inactivating composition for enveloped viruses according to <39>, wherein component (c) is one or more selected from (c1) a polyhydric alcohol with 2 or more and 4 or less carbons [hereinafter referred to as component (c1)], (c2) a di or trialkylene glycol having an alkylene glycol unit with 2 or more and 4 or less carbons [hereinafter referred to as component (c2)] and (c3) a monoalkoxy (methoxy, ethoxy, propoxy, butoxy) ether or a phenoxy or benzoxy ether of a di to tetraalkylene glycol having an alkylene glycol unit with 2 or more and 4 or less carbons [hereinafter referred to as component (c3)].

<41> The inactivating composition for enveloped viruses according to <39> or <40>, wherein component (c) is one or two or more selected from ethylene glycol, propylene glycol, glycerin and isoprene glycol as component (c1), diethylene glycol and dipropylene glycol as component (c2), and propylene glycol monomethyl ether, propylene glycol monoethyl ether, diethylene glycol monobutyl ether (butyldiglycol), phenoxy ethanol, phenoxy triethylene glycol and phenoxy isopropanol as component (c3).

<42> The inactivating composition for enveloped viruses according to any of <39> to <41>, wherein a content of (c4) a monohydric alcohol with 1 or more and 3 or less carbons [hereinafter referred to as component (c4)], which is a water-soluble organic solvent, in the inactivating composition for enveloped viruses is preferably 50 mass% or less, more preferably 30 mass% or less, further preferably 10 mass% or less, furthermore preferably 5 mass% or less, furthermore preferably 1 mass% or less, furthermore preferably 0.5 mass% or less, furthermore preferably 0.1 mass% or less, furthermore preferably 0.01 mass% or less and furthermore preferably 0.001 mass% or less.

<43> The inactivating composition for enveloped viruses according to any of <39> to <42>, wherein component (c) (excluding component (c4)) or components (c1) to (c3) are included in an amount of preferably 0.1 mass% or more, more preferably 0.2 mass% or more, further preferably 0.5 mass% or more, furthermore preferably 1 mass% or more and furthermore preferably 3 mass% or more, and preferably 50 mass% or less, more preferably 30 mass%, further preferably 10 mass% or less and furthermore preferably 7 mass% or less.

<44> The inactivating composition for enveloped viruses according to any of <27> to <43>, wherein a content of the following bactericidal agent is preferably 5 mass% or less, more preferably 1 mass% or less, further preferably 0.1 mass% or less, furthermore preferably 0.01 mass% or less and furthermore preferably 0.0001 mass% or less, bactericidal agent: one or more selected from a quaternary ammonium salt compound such as benzalkonium chloride, benzalkonium alkyl phosphates, benzethonium chloride, cetylpyridinium chloride or the like, triclosan, isopropyl methylphenol, resorcin, trichlorocarbanilide, chlorhexidine chloride, chlorhexidine gluconate, hydrogen peroxide, povidone iodine and iodine tincture.

<45> The inactivating composition for enveloped viruses according to any of <27> to <44>, wherein a pH at 25°C measured by a glass electrode method is selected from 0 or more, further 1 or more, further 2 or more, further 3 or more and further 4 or more, and 11 or less, further 9 or less, further 8 or less and further 7 or less.

<46> The inactivating composition for enveloped viruses according to any of <27> to <45>, wherein uses of the inactivating composition for enveloped viruses cover (1) use on the body (for example, use on human skin, hands and fingers, hair, oral cavity and others), (2) use on food (for example, use on the surface of a food material such as a vegetable or the like and others), (3) use on a hard article (for example, a hard article having a hard surface such as a bathroom, a toilet, a kitchen, a floor, a doorknob, tableware, food processing equipment, a desk, a chair, a wall or the like), or (4) use on textile products (for example, use on a fiber material such as cloth, thread or the like and a product produced using them).

<47> A method for inactivating enveloped viruses including, bringing the inactivating composition for enveloped viruses according to any of <27> to <46> into contact with a surface of interest on which enveloped viruses are present.

<48> A method for inactivating enveloped viruses including, diluting the inactivating composition for enveloped viruses according to any of <27> to <46> with water containing Ca and/or Mg to obtain a mixed liquid, and bringing the mixed liquid into contact with a surface of interest on which enveloped viruses are present.

<49> The method for inactivating enveloped viruses according to <48>, wherein a hardness of water used for diluting the composition to prepare the mixed liquid is preferably 1°DH or more and more preferably 3°DH or more, and preferably 20°DH or less, more preferably 10°DH or less and further preferably 8°DH or less by German hardness.

<50> The method for inactivating enveloped viruses according to <48> or <49>, wherein a pH of the mixed liquid at 25°C measured by a glass electrode method can be selected from 11 or less, preferably 9 or less, more preferably 7 or less and further preferably 5 or less.

<51> The method for inactivating enveloped viruses according to any of <47> to <50>, wherein the surface of interest is of (1) the body (for example, human skin, hands and fingers, hair, oral cavity and others), (2) food (for example, the surface of a food material such as a vegetable or the like and others), (3) a hard article (for example, a hard article having a hard surface such as a bathroom, a toilet, a kitchen, a floor, a doorknob, tableware, food processing equipment, a desk, a chair, a wall or the like, or (4) textile products (for example, a fiber material such as cloth, thread or the like and a product produced using them).

<52> The method for inactivating enveloped viruses according to any of <47> to <51>, wherein a method for bringing the inactivating composition for enveloped viruses or the mixed liquid into contact with the surface of interest on which enveloped viruses are present is a method for spraying or applying the inactivating composition for enveloped viruses or the mixed liquid to the surface of interest on which enveloped viruses are present or considered to be present, a method for immersing the surface of interest in the inactivating composition for enveloped viruses or the mixed liquid, or a method for impregnating non-woven fabric with the inactivating composition for enveloped viruses or the mixed liquid and bringing it into contact with the surface of interest.

<53> The method for inactivating enveloped viruses according to <52>, wherein the method for spraying or applying the inactivating composition for enveloped viruses or the mixed liquid to the surface of interest is a method including, filling the inactivating composition for enveloped viruses or the mixed liquid into a container provided with a sprayer, and spraying the composition or the liquid on the surface of interest in liquid droplet form or foam form, or a method including, flowing the inactivating composition for enveloped viruses or the mixed liquid from a container onto the surface of interest, and applying the composition or the liquid with a brush or the like.

<54> The method for inactivating enveloped viruses according to <53>, wherein in the method for impregnating non-woven fabric with the inactivating composition for enveloped viruses or the mixed liquid and bringing it into contact with the surface of interest, the non-woven fabric is non-woven fabric processed into sheet form, and a fiber constituting the non-woven fabric is made of one or more fibers selected from a hydrophilic fiber and a hydrophobic fiber.
<55> The method for inactivating enveloped viruses according to <51>, wherein when the surface of interest is the body, the inactivating composition for enveloped viruses or the mixed liquid is used as a washing agent for hands and fingers such as a hand soap or the like, a body shampoo or a hair shampoo.
<56> The method for inactivating enveloped viruses according to any of <47> to <52>, wherein the inactivating composition for enveloped viruses or the mixed liquid is obtained in gel form or paste form using a water-soluble gel or an oily gel, and directly applied to the human body, a pet or the like as a medical product, or the inactivating composition for enveloped viruses or the mixed liquid is used as a filter for an air purifier by carrying it on paper, non-woven fabric or the like.
<57> The method for inactivating enveloped viruses according to any of <47> to <56>, wherein a period of time during which the inactivating composition for enveloped viruses or the mixed liquid is brought into contact with the surface of interest on which enveloped viruses are present (a period of time during which they are left alone) is preferably 30 seconds or more, more preferably 1 minute or more and further preferably 5 minutes or more, and preferably 120 minutes or less, more preferably 60 minutes or less and further preferably 10 minutes or less.

Examples

<Formulation component>

In examples and comparative examples, the components below were used.

<Component (a)>

- (a-1): sodium di(2-propylheptyl)sulfosuccinate having a critical micelle concentration (25°C) of $0.35 \times 10^{-3}$ mol/L and a krafft point of less than 5°C
- (a-2): sodium internal olefin sulfonate with 18 carbons having a critical micelle concentration (25°C) of $0.55 \times 10^{-3}$ mol/L and a krafft point of less than 5°C

<Component (a') (comparative component for component (a))>

· (a'-1): sodium di(2-ethylhexyl)sulfosuccinate having a critical micelle concentration (25°C) of $2.8 \times 10^{-3}$ mol/L and a krafft point of less than 5°C
- (a'-2): sodium internal olefin sulfonate with 16 carbons having a critical micelle concentration (25°C) of $2.9 \times 10^{-3}$ mol/L and a krafft point of less than 5°C
- (a'-3): sodium alkyl sulfate with 16 carbons having a critical micelle concentration (25°C) of $0.45 \times 10^{-3}$ mol/L and a krafft point of 40°C
- (a'-4): sodium alkyl sulfate with 12 carbons having a critical micelle concentration (25°C) of $8.2 \times 10^{-3}$ mol/L and a krafft point of less than 5°C
- (a'-5): potassium oleate having a critical micelle concentration (25°C) of $1.5 \times 10^{-3}$ mol/L and a krafft point of less than 5°C

<Method for producing (a-1)>

Sodium di-(2-propylheptyl)sulfosuccinate of (a-1) was prepared as follows. 176.5 g (1.8 mol) of maleic anhydrate (manufactured by FUJIFILM Wako Pure Chemical Corporation, Wako Special Grade), 626.6 g (4.0 mol) of 2-propylheptanol (manufactured by FUJIFILM Wako Pure Chemical Corporation, Reagent Special Grade) and 2.5 g (0.013 mol) of p-ptoluenesulfonic acid monohydrate (manufactured by FUJIFILM Wako Pure Chemical Corporation, reagent special grade) were prepared in a four-neck flask with a capacity of 2 L equipped with a stirrer, a heating system, a distillation column and a nitrogen/vacuum connection, and reacted under nitrogen bubbling after nitrogen exchange at 100 to 130°C with dehydration until an acid value was reduced to an amount equivalent to p-toluenesulfonic acid. Subsequently, a catalyst was adsorbed by KYOWARD 500SH (manufactured by Kyowa Chemical Industry Co., Ltd.) in an amount of 1 mass%

relative to the total amount of the contents of the reaction vessel. After removal of the adsorbent, a surplus of the alcohol was removed by topping to obtain a maleate diester.

Next, 278 g (0.70 mol) of the maleate diester obtained above, 73 g (0.38 mol) of sodium disulfite (manufactured by FUJIFILM Wako Pure Chemical Corporation, reagent special grade) and 48 g (2.7 mol) of ion exchange water were prepared in a 1 L glass reaction vessel, and reacted at 115°C by a publicly-known method using an alcohol-based polar solvent until it was confirmed by NMR that a double bond derived from the maleate diester disappeared. After the reaction product was cooled to 50 to 65°C and remaining sodium hydrogen sulfite was oxidized with 30% hydrogen peroxide, a pH was adjusted to 5 with 10% NaOH. The solvent and sodium sulfate were removed by distillation under reduced pressure, reprecipitation, liquid separation or the like to obtain sodium di-(2-propylheptyl)sulfosuccinate.

<Method for producing (a-2)>

Sodium internal olefin sulfonate with 18 carbons of (a-2) was prepared as follows.

Synthesis of internal olefin as raw material

7000 g (25.9 mol) of 1-octadecanol (product name: KALCOL 8098, manufactured by Kao Corporation) and 700 g (10 mass% relative to the raw material alcohol) of γ-alumina (Strem Chemicals, Inc.) as a solid acid catalyst were prepared in a flask with a stirrer, and a reaction was carried out under stirring at 280°C while nitrogen was flowed (at 7000 mL/min.) through the system. The obtained crude internal olefin was transferred to a distillation flask and distilled at 148-158°C/0.5 mmHg to obtain an internal olefin with 18 carbons with an olefin purity of 100%. A double bond distribution of the obtained internal olefin is shown in Table 1.

[Table 1]

| | Internal olefin A | |
|---|---|---|
| Carbon number of olefin | 18 | |
| Composition in carbon number of olefin (mass%) | Linear olefin | 99.3 |
| | Branched olefin | 0.7 |
| Double bond distribution in linear olefin (mass%) | Position 1 | 0.9 |
| | Position 2 | 25 |
| | Position 3 | 21.9 |
| | Position 4 | 19 |
| | Position 5 | 13.6 |
| | Position 6 | 8.6 |
| | Position 7 | 5.6 |
| | Position 8 | 2.7 |
| | Position 9 | 2.7 |
| | Position 5 or more | 33.2 |

The double bond distribution of internal olefin A was measured by gas chromatography (hereinafter abbreviated as GC). Specifically, after the internal olefin was reacted with dimethyl disulfide to obtain a dithionated derivative, each component was separated from one another by GC. Consequently, the double bond distribution of the internal olefin was determined from their respective peak areas. Note that the respective columns of an internal olefin in which a double bond is present in position 8 and an internal olefin in which a double bond is present in position 9 show a value obtained by dividing an amount of the internal olefin in which a double bond is present in position 8 by 2 for convenience as they are not structurally distinguishable from one another in the olefin with 18 carbons, but are distinguishable after sulfonation.

Further, the following instruments and analysis conditions were used for measurements: the GC system "HP6890" (manufactured by the Hewlett-Packard Company), the column "Ultra-Alloy-1HT Capillary Column" (30 m × 250 μm × 0.1 pm, manufactured by Frontier Laboratories Ltd.), detector (flame ionization detector (FID)), injection temperature 300°C, detector temperature 350°C and flow rate of He 4.6 mL/min.

2. Synthesis of sodium internal olefin sulfonate

A sulfonation reaction of internal olefin A was carried out with sulfur trioxide gas using a thin-film sulfonation reactor having an outer jacket while passing cooling water at 20°C through the reactor's outer jacket. The molar ratio $SO_3$/internal olefin at the time of the sulfonation reaction was set to 1.09. The obtained sulfonated product was added to an aqueous alkali solution prepared from sodium hydroxide in an amount 1.5 molar times the theoretic acid value and neutralized under stirring at 30°C for 1 hour. The neutralized product was heated in an autoclave at 160°C for 1 hour to carry out hydrolysis, thus obtaining a crude product of sodium internal olefin sulfonate. After 300 g of the crude product was transferred to a separatory funnel and 300 mL of ethanol was added, 300 mL of petroleum ether was added per time to extract and remove oil-soluble impurities. At this time, inorganic compounds (composed mainly of sodium sulfate) which had precipitated at the oil-water interface due to addition of ethanol were also separated and removed from the water phase by an oil-water separation operation. This extraction and removal operation was performed three times. The water phase side was evaporated to dryness to obtain sodium internal olefin sulfonate.

Content proportions in the internal olefin sulfonate with a sulfonic acid group bonded were measured by high-performance liquid chromatography/mass spectrometry (HPLC-MS). Specifically, each hydroxy species with a sulfonic acid group bonded was separated from one another by high-performance liquid chromatography (HPLC), and identified by mass spectrometry (MS). Consequently, a proportion of each of them was determined from HPLC-MS peak areas of them. Herein, the proportion of each HAS species determined from the peak areas of them was calculated as a mass proportion. Note that the following instruments and conditions were used for measurements: the HPLC system "LC-20ASXR" (manufactured by SHIMADZU CORPORATION), the column "ODS Hypersil®" (4.6 × 250 mm, particle size: 3 um, manufactured by Thermo Fisher Scientific K.K.), sample preparation (1000-fold dilution with methanol), eluent A (10 mM ammonium acetate addition water), eluent B (10 mM ammonium acetate addition and methacrylonitrile/water = 95/5 (v/v) solution), gradient (0 minutes (A/B = 60/40) -> 15.1 to 20 minutes (30/70) -> 20.1 to 30 minutes (60/40)), the MS system "LCMS-2020" (manufactured by SHIMADZU CORPORATION), ESI detection (anion detection, m/z: 349.15), column temperature (40°C), flow rate (0.5 mL/min) and injection volume (5 μL). An obtained position distribution of carbon bonded to a sulfonic acid group is shown in Table 2.

[Table 2]

| Carbon number of hydrocarbon group | | | 18 |
|---|---|---|---|
| Distribution of sulfonic acid group (mass%) | Position 1 | | 1.4 |
| | IO-1S | Position 2 | 22.1 |
| | | Position 3 | 17.2 |
| | | Position 4 | 21.8 |
| | IO-2S | Position 5 or more | 37.5 |
| Content of IO-1S (mass%) | | | 61.1 |
| (IO-1S)/(IO-2S) (mass ratio) | | | 1.6 |

A critical micelle concentration of component (a) or (a') at 25°C was measured by the method below.

A 1 × $10^{-3}$ mol/L ethanol solution of pyrene (FUJIFILM Wako Pure Chemical Corporation) was prepared in a brown screw cap tube, and 5 μl of the solution was placed in a screw cap tube (No. 3) and dried with dry air. 5 mL of an aqueous solution of component (a) or (a') to be measured (prepared with ion exchange water) was added thereto and processed with an ultrasonic cleaner for 15 minutes, and using this, fluorescence spectrum measurements were performed with a fluorescence spectrophotometer (Fluorescence Spectrophotometer F-7000 (manufactured by Hitachi High-Tech Corporation)). Fluorescence intensities $I_1$ and $I_3$ at wavelengths $\lambda_1$ of 373 nm and $\lambda_3$ of 384 nm were measured under the measurement conditions below to calculate fluorescence intensity ratio $I_1/I_3$.

A graph was prepared on which the horizontal axis plots a concentration of component (a) or (a') and the vertical axis plots a fluorescence intensity ratio $I_1/I_3$ at each concentration, and a surfactant concentration at the midpoint between the maximum value and the minimum value of $I_1/I_3$ was taken as the critical micelle concentration.

[Measurement conditions]

Excitation wavelength: 339 nm, slit on the excitation side: 10 mm, slit on the fluorescence side: 1 mm, scanning rate: 60 nm/min, liquid temperature: 25°C, measurement range: 350 to 400 nm

A krafft point of component (a) or (a') was measured by the method below.

A solution obtained by diluting component (a) or (a') with ion exchange water to attain a total amount of 5 mL and a concentration of 0.2 mass% was prepared and placed in a glass test tube, and the fluorescent dye rhodamine 6G (FUJIFILM Wako Pure Chemical Corporation) was then added to attain a final concentration of 0.02 mM. After the test tube was placed in an ice bath to condition a temperature at 5°C, the temperature was raised at a temperature rise rate of 0.5°C/min, and a temperature at which the solution emitted fluorescence was taken as the krafft point. Component (a) or (a') which had emitted fluorescence at 5°C was considered to have a krafft point of less than 5°C.
FIG. 1 shows a graph on which the vertical axis plots the critical micelle concentration (25°C) of each component (a) or (a') and the horizontal axis plots the krafft point thereof.

[Preparation of evaluation liquid and control liquid]

The evaluation liquids in Tables 3 and 4 were each prepared by diluting component (a) or (a') (comparative component for component (a)) with sterile distilled water (Invitrogen, PiN 10977) to attain a specific concentration, and dispensed in a sterile tube. Further, the evaluation liquids in Table 5 with a hardness of water of 4°DH were each prepared by diluting a 4000°DH hardness aqueous solution with sterile distilled water 1000 times and diluting component (a) or (a') (comparative component for component (a)) with the dilution to attain a specific concentration, and dispensed in a sterile tube. The 4000°DH hardness aqueous solution was prepared by mixing 1 L of sterile distilled water, 83.9 g of calcium chloride dihydrate and 29.0 g of magnesium chloride hexahydrate.
Sterile distilled water (Invitrogen, PiN 10977) was dispensed in a sterile tube and used as a control liquid. They were all left to stand at a room temperature until they were used for tests. The above evaluation liquids and control liquid were used for the tests below.

[Anti-influenza virus verification test]

An anti-influenza virus verification test is summarized below.

(1) Virus used for test

Influenza A virus (H1N1, A/PR/8/34) ATCC VR-1469

(2) Preparation of viral liquid used for test

After MDCK cells were cultured in a T175 flask in a confluent state ($2 \times 10^7$ cells/flask) and washed with PBS, the influenza A virus (H1N1, A/PR/8/34) in an amount to attain an MOI of 0.001 was added to 40 mL of a serum-free medium (Gibco, Hybridoma Serum Free Medium, PiN 123-00067, hereinafter referred to as SFM) in which acetyl trypsin to attain a final concentration of 2 pg/mL and 50 mg/L gentamicin were added, and the cells were infected therewith. After approximately 48 hours of culture under 5% $CO_2$ at 37°C, a cell culture supernatant was collected, and the supernatant subjected to centrifugation (800 g/10 min at 4°C) was again subjected to centrifugation (13,000 g/10 min at 4°C) to remove a supernatant, thereby obtaining a virus concentrate (precipitation). The virus concentrate was resuspended in 150 to 200 μL of SFM and thereafter further subjected to centrifugation (800 g/10 min at 4°C) to collect a supernatant, thereby obtaining a concentrated influenza A virus liquid. The concentrated influenza A virus liquid whose viral titer was measured by focus assays and adjusted to a viral titer of $1 \times 10^8$ FFU/mL on the basis of measurement results was used as a test viral liquid.

(3) Preparation of diluting solution for measurements (SCDLP solution)

38 g of SCDLP powder (NIHON PHARMACEUTICAL CO., LTD., PiN 395-00265) was weighed and dissolved in 1 L of ion exchange water, and thereafter subjected to an autoclaving process to prepare an SCDLP solution.

(4) Test operation

1. 5 μL of the test viral liquid was added to 45 μL of each of the evaluation liquids in Tables 3 to 5 or the control liquid and immediately stirred with a vortex mixer for 15 seconds, and the mixed liquid was then left to stand.
2. After the mixed liquid was left to stand for a period of time shown in Tables 3 to 6 from the contact (the addition of the test viral liquid), 950 μL of the SCDLP solution was added and stirred with a vortex mixer for 10 seconds. Further, 10-fold step-wise dilutions were made with SFM.

3. 500 μL of each of the liquids diluted with SFM was inoculated into MDCK cells in a confluent state in a 12 well plate, 3 wells per liquid.
4. 18 to 22 hours later, an infectious titer (FFU/mL) of the inoculated solution was measured (by focus assays).

[Test result]

Table 3 shows the minimum concentration of each evaluation liquid at which a difference between logarithms of the infectious titers of the control liquid (water only) and the evaluation liquid, ΔLOG (FFU/mL), is 3 or more (the minimum inactivation concentration) in the above anti-influenza virus verification test.

Further, in Tables 4 and 5, evaluation liquids with a ΔLOG (FFU/mL) of the infectious titers of less than 1, a ΔLOG (FFU/mL) of 1 or more and less than 2, a ΔLOG (FFU/mL) of 2 or more and less than 3 and a ΔLOG (FFU/mL) of 3 or more in the above anti-influenza virus verification test are indicated respectively as "1," "2," "3" and "4." The results are shown in Tables 3 to 5.

[Anti-human coronavirus verification test]

An anti-human coronavirus verification test is summarized below.

(1) Virus used for test

Betacoronavirus 1 (OC43) ATCC VR-1558

(2) Preparation of viral liquid used for test

After HCT-8 cells were cultured in a T175 flask in a confluent state ($3.5 \times 10^7$ cells/flask) and washed with PBS, Betacoronavirus 1 (OC43) in an amount to attain an MOI of 0.001 was added to 12 mL of RPMI 1640 (SIGMA, PiN 187-02705, hereinafter referred to as RPMI) in which 2% inactivated bovine serum and 50 mg/L gentamicin were added, and the cells were infected therewith. After 60 minutes passed from the infection, an RPMI medium in an amount of 28 mL and acetyl trypsin in an amount to attain a final concentration of 2 g/mL were added, and culture was carried out under 5% $CO_2$ at 33°C for 4 days. After a cell culture supernatant was collected and freeze-thaw was repeated 3 times to destruct the cells, the supernatant subjected to centrifugation (1,200 g/10 min at 4°C) was again subjected to centrifugation (13,000 g/120 min at 4°C) to remove a supernatant, thereby obtaining a virus concentrate (precipitation). The virus concentrate was resuspended in 150 to 200 μL of PBS to obtain a concentrated Betacoronavirus liquid. The concentrated Betacoronavirus liquid whose viral titer was measured by a TCID method and adjusted to a viral titer of $1 \times 10^8$ $TCID_{50}$/mL on the basis of measurement results was used as a test viral liquid.

(3) Preparation of diluting solution for measurements (SCDLP solution)

38 g of SCDLP powder (NIHON PHARMACEUTICAL CO., LTD., PiN 395-00265) was weighed and dissolved in 1 L of ion exchange water, and thereafter subjected to an autoclaving process to prepare an SCDLP solution.

(4) Test operation

1. 5 μL of the test viral liquid was added to 45 μL of each of the evaluation liquids in Table 3 or the control liquid and immediately stirred with a vortex mixer for 15 seconds, and the mixed liquid was then left to stand.
2. After the mixed liquid was left to stand for a period of time shown in Table 3 from the contact (the addition of the test viral liquid), 950 μL of the SCDLP solution was added and stirred with a vortex mixer for 10 seconds. Further, 10-fold step-wise dilutions were made with an RPMI medium.
3. 100 μL of each of the liquids diluted with RPMI was inoculated into HCT-8 cells in a confluent state in a 96 well plate, 4 wells per liquid.
4. 90 to 96 hours later, an infectious titer of the inoculated solution ($TCID_{50}$/mL) was measured.

[Test result]

Table 3 shows the minimum concentration of each evaluation liquid at which a difference between logarithms of the infectious titers of the control liquid (water only) and the evaluation liquid, ΔLOG ($TCID_{50}$/mL), is 3 or more (the

minimum inactivation concentration) in the above anti-human coronavirus verification test.

[Anti-bacteriophage Φ6 verification test]

An anti-bacteriophage Φ6 verification test is summarized below.

(1) Virus used for test

*Pseudomonas syringae* phage Φ6 (NBRC 105899)

(2) Preparation of host bacterium culture liquid

*Pseudomonas syringae* (NBRC 14084), a host bacterium was cultured in an LB agar culture medium at 30°C for 18 to 22 hours. The cultured bacterium was dispersed (OD = 0.1) in an LB liquid culture medium (Becton, Dickinson and Company, Difco® LB Broth Lennox), and cultured by shaking at 200 rpm for 18 to 22 hours at 30°C. The bacterial liquid after culture was further diluted with an LB liquid culture medium (OD = 0.24), and the bacterial liquid approximately 5 hours later (OD = 0.8) was used as a host bacterium culture liquid.

(3) Preparation of virus used for test

1 ml of the host bacterium culture liquid and 3 ml of an LB soft agar culture medium stored at 48°C were mixed and stacked on an LB agar culture medium. *Pseudomonas syringae* phage Φ6 (NBRC 105899) was further smeared thereon, and cultured overnight at 30°C.

If it could be confirmed that plaques had been formed on the soft agar, 3 ml of an LB liquid culture medium was added onto the agar, scraped off all together with the soft agar using an inoculation loop, and collected in a 50 mL centrifuge tube. After collection, centrifugation (4°C, 10000 rpm, 15 minutes) was performed to separate the agar culture medium and the host bacterium. A supernatant was collected and filtered with a syringe equipped with a 0.22 μm filter to obtain a concentrated bacteriophage Φ6 liquid. The concentrated bacteriophage Φ6 liquid whose viral titer was measured by plaque assays and adjusted to a viral titer of $1 \times 10^8$ PFU/mL on the basis of measurement results was used as a test viral liquid.

(4) Preparation of diluting solution for measurements (SCDLP solution)

38 g of SCDLP powder (NIHON PHARMACEUTICAL CO., LTD., PiN 395-00265) was weighed and dissolved in 1 L of ion exchange water, and thereafter subjected to an autoclaving process to prepare an SCDLP solution.

(5) Test operation

1. 10 μL of the test viral liquid was added to 90 μL of each of the evaluation liquids in Table 3 or the control liquid and immediately stirred with a vortex mixer for 15 seconds, and the mixed liquid was then left to stand.
2. After the mixed liquid was left to stand for a period of time shown in Table 3 from the contact (the addition of the test viral liquid), 900 μL of the SCDLP solution was added and stirred with a vortex mixer for 10 seconds. Further, 10-fold step-wise dilutions were made with the SCDLP solution.
3. 30 μL of each of the liquids diluted with the SCDLP solution was mixed with 270 μL of the host bacterium culture liquid. The mixed liquid was added by 1.5 ml of an LB soft agar culture medium, stirred with a vortex mixer for 10 seconds, and stacked on an LB agar culture medium on a 6 well plate.
4. 18 to 22 hours later, an infectious titer (PFU/mL) was measured by plaque assays.

[Test result]

Table 3 shows the minimum concentration of each evaluation liquid at which a difference between logarithms of the infectious titers of the control liquid (water only) and the evaluation liquid, ΔLOG (PFU/mL), is 3 or more (the minimum inactivation concentration) in the above anti-bacteriophage Φ6 verification test.

[Table 3]

| | | | Example | | Comparative example | | | |
|---|---|---|---|---|---|---|---|---|
| | | | 1 | 2 | 1 | 2 | 3 | 4 |
| | | | Type of component (a) | | Type of component (a’) | | | |
| Evaluation liquid | Antiviral verification test | | (a-1) | (a-2) | (a’-1) | (a’-2) | (a’-3) | (a’-4) |
| Hardness of water (°DH) | Contact time (min) | Virus species | Minimum inactivation concentration (ppm) | | | | | |
| 0 | 10 | Influenza virus | 50 | 100 | 250 | 500 | >500 | >500 |
| | | Human coronavirus | 100 | - | >250 | >500 | >2000 | >2000 |
| | | Bacteriophage Φ6 | 10 | 10 | 250 | 250 | >500 | >500 |

In Table 3, the minimum inactivation concentrations (ppm) expressed as ">XXX" mean that the minimum inactivation concentrations (ppm) were more than those shown in Table 3.

It is understood from the results in Table 3 that examples 1 and 2 in which component (a) of the present invention was used had high inactivation effects on the enveloped viruses even under low-concentration conditions as compared to comparative examples 1 to 4 in which comparative component (a’) was used.

[Table 4]

| | | | | Example | | Comparative example | |
|---|---|---|---|---|---|---|---|
| | | | | 3 | 4 | 5 | 6 |
| | | | | Type of component (a) | | Type of component (a’) | |
| Evaluation liquid | | Antiviral verification test | | (a-1) | (a-2) | (a’-1) | (a’-2) |
| Concentration of (a) or (a’) (ppm) | Hardness of water (°DH) | Contact time (min) | Virus species | Evaluation result | | | |
| 100 | 0 | 0.5 | Influenza virus | 4 | 3 | 1 | 1 |
| | | 1 | | 4 | 3 | 1 | 1 |
| | | 5 | | 4 | 4 | 1 | 1 |
| | | 10 | | 4 | 4 | 2 | 1 |

It is understood from the results in Table 4 that examples 3 and 4 in which component (a) of the present invention was used had high inactivation effects on the enveloped virus even by short-time contact as compared to comparative examples 5 and 6 in which comparative component (a’) was used.

[Table 5]

| | | | | Example | | Comparative example |
|---|---|---|---|---|---|---|
| | | | | 5 | 6 | 7 |
| | | | | Type of component (a) | | Type of component (a’) |
| Evaluation liquid | | Antiviral verification test | | (a-1) | (a-2) | (a’-5) |
| Concentration of (a) or (a’) (ppm) | Hardness of water (°DH) | Contact time (min) | Virus species | Evaluation result | | |
| 500 | 4 | 10 | Influenza virus | 4 | 4 | 1 |

It is understood from the results in Table 5 that examples 5 and 6 in which component (a) of the present invention was used had high inactivation effects even in the presence of hardness components considering dilution with general tap water. On the other hand, it is understood that comparative example 7 in which comparative component (a') was used had an insufficient inactivation effect in the presence of hardness components.

<Formulation example>

Table 6 shows formulation examples of the inactivating composition for enveloped viruses of the present invention. The formulation examples in Table 6 can exhibit high inactivation effects on enveloped viruses. Further, formulation examples 1 to 8 can be used as-is as a raw solution without diluting with water. Further, formulation example 9 can be used by diluting it with water to approximately 0.2 mass%. Further, formulation example 10 can be used by diluting it with water approximately 100 times to 1000 times.

[Table 6]

| | | | | Formulation example | | | | | | | | | | |
|---|---|---|---|---|---|---|---|---|---|---|---|---|---|---|
| | | | | 1 | 2 | 3 | 4 | 4 | 5 | 6 | 7 | 8 | 9 | 10 |
| Inactivating composition for enveloped viruses | Formulation component (mass%) | (a) | Sodium di-(2-propylheptyl) sulfosuccinate | 0.79 | 1 | 1 | 1.75 | 0.25 | 0.25 | | | 0.05 | 2.5 | |
| | | | Sodium di-(3,5,5-trimethylhexyl) sulfosuccinate | | | | | | | 0.25 | 0.25 | | | |
| | | | Sodium α-olefin sulfonate (18 carbons) | | | | | | | | | | | 1 |
| | | (b) | Sodium polyoxyethylene lauryl ether sulfate | | | | | 0.25 | | 0.25 | | | | 6 |
| | | | Alkyl glycoside | | | | | | 0.25 | | 0.25 | 0.45 | | |
| | | | Sodium polyoxypropylene lauryl ether sulfate | | | | | | | | | | | |
| | | | Lauryl hydroxysulfo betaine | 0.21 | 4 | 4 | 3.25 | | | | | | | |
| | | | Lauryldimethylamine oxide | | | | | | | | | | | 6 |
| | | (c) | Butyldiglycol | | 8 | 8 | 5 | 1 | 1 | 1 | 1 | 1 | | 2 |
| | | | Propylene glycol | | | 8 | | | | | | | | |
| | | Polypropylene glycol | | | | | | | | | | | 2 | |
| | | Hydrotropic agent | | | | | 1.94 | | | | | | | |
| | | Chelating agent | | | | | 4 | | | | | | 10 | |
| | | Thickener | | | | | | | | | | | 1 | |
| | | Water | | Balance | Balance | Balance | Balance | Balance | Balance | Balance | Balance | Balance | Balance | Balance |
| | | Total amount | | 100 | 100 | 100 | 100 | 100 | 100 | 100 | 100 | 100 | 100 | 100 |
| | (a)/(b) (mass ratio) | | | 3.76 | 0.25 | 0.25 | 0.54 | 1.00 | 1.00 | 1.00 | 1.00 | 0.11 | - | 0.08 |
| | pH (25 °C) | | | 6 | 6 | 6 | 6 | 6 | 6 | 6 | 6 | 6 | 7.8 | 7.8 |

Note that, in the formulation examples, inactivating compositions for SARS coronavirus 2 were prepared by using components (a), (b) and (c) and other components listed below.

<Component (a)>

· Sodium di-(2-propylheptyl)sulfosuccinate

· Sodium di-(3,5,5-trimethylhexyl)sulfosuccinate
· Sodium α-olefin sulfonate (18 carbons): the sample name LIPOLAN PB-800CJ (manufactured by Lion Corporation)

<Component (b): surfactant>

· Sodium polyoxyethylene lauryl ether sulfate: an average number of added moles of an oxyethylene group is 3
· Alkyl glycoside: the alkyl group has 8 to 16 carbons, and a degree of sugar condensation is 1.3
· Lauryl hydroxysulfo betaine
· Lauryldimethylamine oxide

<Component (c): water-soluble organic solvent>

· Butyldiglycol
· Propylene glycol

<Other components>

· Polypropylene glycol: a weight average molecular weight is 3000
· Hydrotropic agent: para-toluenesulfonic acid monohydrate
· Chelating agent: citric acid
· Thickener: xanthan gum

## Claims

**1.** An inactivating agent for enveloped viruses comprising, as an effective component, (a) an anionic surfactant (hereinafter referred to as component (a)) having a critical micelle concentration of $0.2 \times 10^{-3}$ mol/L or more and $2.0 \times 10^{-3}$ mol/L or less at 25°C and a krafft point of 5°C or less and having a sulfonic acid group, a sulfate group or a salt of these substituents.

**2.** The inactivating agent for enveloped viruses according to claim 1, wherein the component (a) is an anionic surfactant having a critical micelle concentration of $0.2 \times 10^{-3}$ mol/L or more and $2.0 \times 10^{-3}$ mol/L or less at 25°C and a krafft point of 5°C or less and having a sulfonic acid group or a salt thereof internally of a linear or branched hydrocarbon chain with 18 or more and 24 or less carbons optionally divided by an ester group.

**3.** The inactivating agent for enveloped viruses according to claim 1 or 2, wherein the component (a) is one or more anionic surfactants selected from the following components (a1) and (a2),

component (a1): a sulfosuccinic acid branched alkyl ester or a salt thereof having a critical micelle concentration of $0.2 \times 10^{-3}$ mol/L or more and $2.0 \times 10^{-3}$ mol/L or less at 25°C and a krafft point of 5°C or less and having a branched alkyl group with 9 or more and 12 or less carbons, and
component (a2): an internal olefin sulfonic acid or a salt thereof with 18 or more and 24 or less carbons having a critical micelle concentration of $0.2 \times 10^{-3}$ mol/L or more and $2.0 \times 10^{-3}$ mol/L or less at 25°C and a krafft point of 5°C or less.

**4.** The inactivating agent for enveloped viruses according to claim 1 or 2, wherein the component (a) is the following component (a3),
component (a3): an α-olefin sulfonate or a salt thereof with 18 carbons having a critical micelle concentration of $0.2 \times 10^{-3}$ mol/L or more and $2.0 \times 10^{-3}$ mol/L or less at 25°C and a krafft point of 5°C or less.

**5.** The inactivating agent for enveloped viruses according to any one of claims 1 to 4, wherein the component (a) is included in an amount of 0.01 mass% or more and 100 mass% or less.

**6.** An inactivating composition for enveloped viruses comprising, as an effective component, (a) an anionic surfactant (hereinafter referred to as component (a)) having a critical micelle concentration of $0.2 \times 10^{-3}$ mol/L or more and $2.0 \times 10^{-3}$ mol/L or less at 25°C and a krafft point of 5°C or less and having a sulfonic acid group, a sulfate group or a salt of these substituents, and further comprising water.

**7.** The inactivating composition for enveloped viruses according to claim 6, wherein the component (a) is an anionic surfactant having a critical micelle concentration of $0.2 \times 10^{-3}$ mol/L or more and $2.0 \times 10^{-3}$ mol/L or less at 25°C and a krafft point of 5°C or less and having a sulfonic acid group or a salt thereof internally of a linear or branched hydrocarbon chain with 18 or more and 24 or less carbons optionally divided by an ester group.

**8.** The inactivating composition for enveloped viruses according to claim 6 or 7, wherein the component (a) is one or more anionic surfactants selected from the following components (a1) and (a2),

component (a1): a sulfosuccinic acid branched alkyl ester or a salt thereof having a critical micelle concentration of $0.2 \times 10^{-3}$ mol/L or more and $2.0 \times 10^{-3}$ mol/L or less at 25°C and a krafft point of 5°C or less and having a branched alkyl group with 9 or more and 12 or less carbons, and
component (a2): an internal olefin sulfonic acid or a salt thereof with 18 or more and 24 or less carbons having a critical micelle concentration of $0.2 \times 10^{-3}$ mol/L or more and $2.0 \times 10^{-3}$ mol/L or less at 25°C and a krafft point of 5°C or less.

**9.** The inactivating composition for enveloped viruses according to claim 6 or 7, wherein the component (a) is the following component (a3),
component (a3): an $\alpha$-olefin sulfonate or a salt thereof with 18 carbons having a critical micelle concentration of $0.2 \times 10^{-3}$ mol/L or more and $2.0 \times 10^{-3}$ mol/L or less at 25°C and a krafft point of 5°C or less.

**10.** The inactivating composition for enveloped viruses according to any one of claims 6 to 9, wherein the component (a) is included in an amount of 5 mass ppm or more and 300000 mass ppm or less.

**11.** The inactivating composition for enveloped viruses according to any one of claims 6 to 10, wherein a hardness of the water is 0°DH or more and 4°DH or less.

**12.** A method for inactivating enveloped viruses comprising, bringing the inactivating composition for enveloped viruses according to any one of claims 6 to 11 into contact with a surface of interest on which enveloped viruses are present.

**13.** The method for inactivating enveloped viruses according to claim 12, wherein the inactivating composition for enveloped viruses is brought into contact with the surface of interest on which enveloped viruses are present for 30 seconds or more and 120 minutes or less.

**14.** A method for inactivating enveloped viruses comprising, diluting the inactivating composition for enveloped viruses according to any one of claims 6 to 11 with water containing Ca and/or Mg to obtain a mixed liquid, and bringing the mixed liquid into contact with a surface of interest on which enveloped viruses are present.

**15.** The method for inactivating enveloped viruses according to claim 14, wherein the mixed liquid is brought into contact with the surface of interest on which enveloped viruses are present for 30 seconds or more and 120 minutes or less.

[FIG. 1]

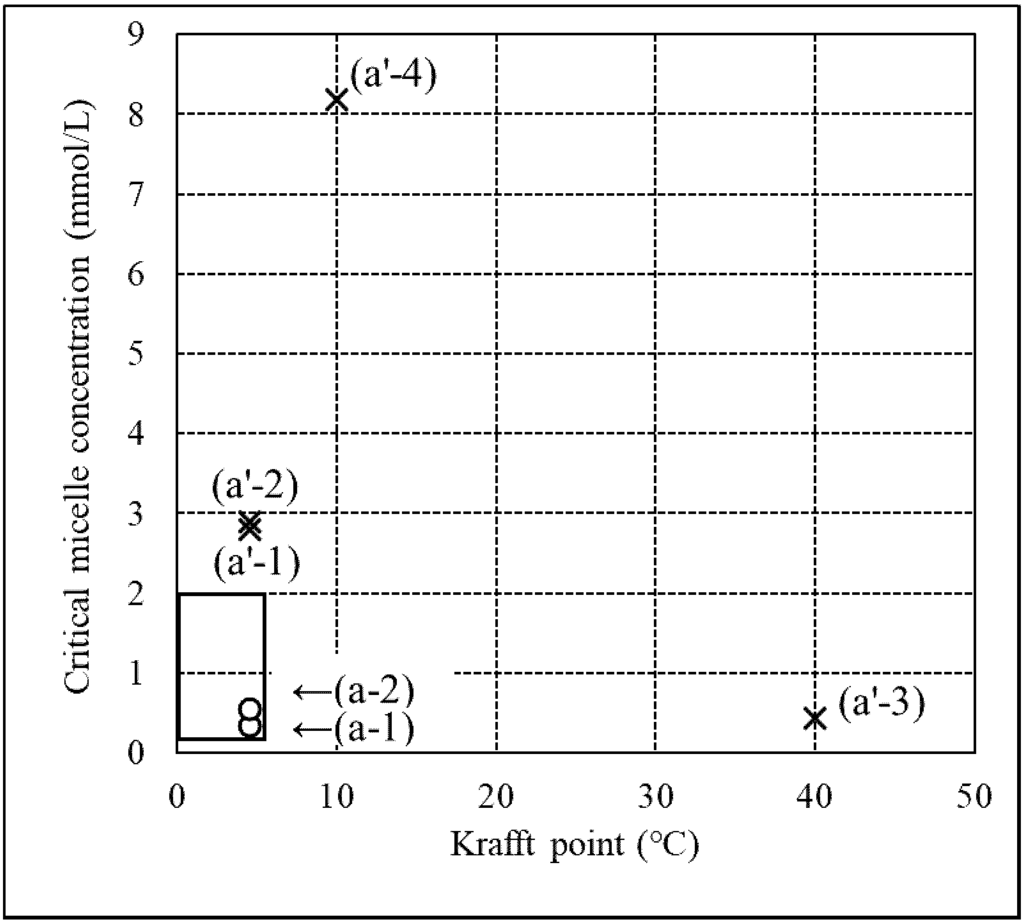
Critical micelle concentration (mmol/L)
9
8
7
6
5
4
3
2
1
0
0
10
20
30
40
50
Krafft point (°C)
(a'-4)
(a'-2)
(a'-1)
←(a-2)
←(a-1)
(a'-3)

**INTERNATIONAL SEARCH REPORT**

International application No.
**PCT/JP2023/000966**

**A. CLASSIFICATION OF SUBJECT MATTER**

***A01N 41/04***(2006.01)i; ***A01N 25/04***(2006.01)i; ***A01N 25/30***(2006.01)i; ***A01P 1/00***(2006.01)i; ***C11D 1/14***(2006.01)i; ***C11D 1/28***(2006.01)i; ***C11D 3/48***(2006.01)i
FI: A01N41/04 Z; A01N25/04 101; A01N25/30; A01P1/00; C11D1/14; C11D1/28; C11D3/48

According to International Patent Classification (IPC) or to both national classification and IPC

**B. FIELDS SEARCHED**

Minimum documentation searched (classification system followed by classification symbols)

A01N41/04; A01N25/04; A01N25/30; A01P1/00; C11D1/14; C11D1/28; C11D3/48

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | JP 2015-205876 A (EVONIK INDUSTRIES AG) 19 November 2015 (2015-11-19) claims, paragraph [0037] | 1-15 |
| A | JP 2021-506807 A (HENKEL AG & CO. KGAA) 22 February 2021 (2021-02-22) claims, paragraph [0024] | 1-15 |
| A | JP 2021-66699 A (KAO CORP) 30 April 2021 (2021-04-30) claims | 1-15 |
| P, A | WO 2022/138190 A1 (KAO CORP) 30 June 2022 (2022-06-30) claims | 1-15 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **10 March 2023** | **20 March 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2023/000966**

| Patent document cited in search report | Publication date (day/month/year) | Patent family member(s) | Publication date (day/month/year) |
|---|---|---|---|
| JP 2015-205876 A | 19 November 2015 | US 2015/0297489 A1<br>claims, paragraph [0050]<br>EP 2932959 A1<br>CN 105030556 A | |
| JP 2021-506807 A | 22 February 2021 | US 2020/0323757 A1<br>claims, paragraph [0028]<br>WO 2019/115103 A1<br>CN 111432786 A | |
| JP 2021-66699 A | 30 April 2021 | (Family: none) | |
| WO 2022/138190 A1 | 30 June 2022 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5593572 B
- JP 6860734 B
- JP 2021066697 A
- US 2028091 B
- JP S5824555 A
- JP 2012232944 A


### Non-patent literature cited in the description


- **WHILE YOKOHATA et al.** Scientific Basis for Novel Viral Disinfection Mechanism Directed to Risk Control of Contact Infection Route ~ Systematic Review of Chemical Substance Group for Inactivating Coronaviruses and Influenza viruses~. *Japanese Journal of Risk Analysis*, vol. 30 (1), 1-24
- *J. Am. Oil Chem. Soc*, 1992, vol. 69, 39